# EUROPÄISCHE PATENTSCHRIFT

(11) **EP 2 056 309 B1**
(45) Veröffentlichungstag und Bekanntmachung des Hinweises auf die Patenterteilung: **05.05.2010**
(21) Anmeldenummer: 08105431.4
(22) Anmeldetag: 25.09.2008
(51) Int. Cl.: H01F 41/06

(54) **Verfahren zur Herstellung einer Spule und eine Spule**
Method for manufacturing a spool and a spool
Procédé de fabrication d'une bobine et bobine

(30) Priorität: 01.03.2008 DE 102008012120; 25.09.2007 DE 102007045946
(43) Veröffentlichungstag der Anmeldung: 06.05.2009
(73) Patentinhaber: STZ Mechatronik, 98693 Ilmenau (DE)
(72) Erfinder: Kallenbach, Eberhard, 98714 Stützerbach (DE); Kallenbach, Matthias, 98714 Stützerbach (DE); Otto, Rainer, 07768 Lindig (DE); Kostelnik, Jan, 74592 Kirchberg a.d. Jagst (DE)
(74) Vertreter: Liedtke, Markus

(56) Entgegenhaltungen:
- EP-A- 0 469 609
- WO-A-2007/014570
- DE-A1- 3 148 192
- DE-A1- 19 811 578
- DE-A1-102004 034 611
- US-A- 2 911 605
- US-A- 4 755 783
- US-A- 5 719 451

## Beschreibung

Die Erfindung betrifft ein Verfahren zur Herstellung einer Spule und eine Spule.

Im Stand der Technik erfolgt eine Erzeugung räumlich definierter, steuerbarer Magnetfelder mittels Erregerspulen, die aus einem oder mehreren zweckmäßig angeordneten elektrischen Leitern, z. B. Metalldrähten oder Metallfolien, bestehen und von elektrischen Strömen durchflossen werden.

Üblicherweise bestehen elektrische Spulen aus einem mit einer definierten Windungsanzahl um ein magnetisches oder nichtmagnetisches Kernmaterial gewickelten, hochwertigen elektrischen Leiter, z. B. einem Metalldraht oder einer Metallfolie. Die Drähte oder Folien sind dabei entweder frei oder definiert auf einen Spulenkörper gewickelt und mittels einer Isolationslage, z. B. einem Lack, elektrisch isoliert.

Spulen können beispielsweise nach einer Spulenform, z. B. Zylinderspulen, Rechteckspulen, Formspulen, nach einer Spulenausführung, z. B. Drahtspulen, Folienspulen, nach einer Spulenwicklung, z. B. Reihenwicklung, orthozyklische Wicklung, ungeordnete Wicklung, oder einer Spulenanzahl, z. B. mit einer Spule, mit mehreren Spulen, deren elektrische Felder sich überlagern, eingeteilt werden.

Weiterhin sind im Stand der Technik Folien- oder Bandspulen bekannt, bei welchen mit dem Ziel eines hohen Leiterfüllfaktors ein Folien- oder Bandmaterial aufgewickelt wird, wobei einzelne Lagen des Folien- oder Bandmaterials mittels einer eingebrachten Isolationsschicht voneinander elektrisch isoliert ausgeführt sind.

Nachteilig ist jedoch, dass bei Spulensystemen, wie z. B. Statorwicklungen in Elektromotoren oder Multipolspulen in elektronenoptischen Geräten, das zuvor beschriebene klassische Wickeln der Spulen sehr aufwändig ist. Dabei müssen Einzelspulen nach einem definierten Wickelschema derart gewickelt werden, dass bei einer Beaufschlagung der Spulen mit einem elektrischen Strom ein dreidimensionales Magnetfeld erzeugt wird, dessen Feldstärke- und Induktionsverteilung genau definiert ist. Bei geringen Herstellungsstückzahlen ist häufig ein aufwändiges manuelles Bewickeln notwendig, bei großen Herstellungsstückzahlen werden mechanische Vorrichtungen verwendet, mit denen der elektrische Leiter, z. B. der Metalldraht, gewickelt und durch einen Statorhohlkörper geführt wird.

Aus der EP 0 153 131 A2 ist eine Spule bekannt, die aus einem gerolltem Substrat hergestellt ist, auf das eine oder mehrere Flachspulen aufgedruckt ist oder sind. Das Substrat ist dabei einlagig gerollt. Nachteilig ist dabei, dass derartige Spulen nur eine geringe Induktivität aufweisen.

Auch ist nachteilig, dass insbesondere bei klassisch gewickelten Spulen ohmsche Verluste zwischen den einzelnen Leitern, insbesondere in Form von Wärme, abgeleitet werden müssen. Daraus ergibt sich als weiterer Nachteil, dass die Strombelastbarkeit der Spule durch eine geringe mögliche Stromdichte bezogen auf die Leiterquerschnittsfläche begrenzt ist, wenn keine zusätzlichen Maßnahmen zu einer Kühlung der Spule angewendet werden, die wiederum erhöhte Kostenaufwendungen verursachen.

Aus G 92 02 635.4 und aus US 4,621,231 ist jeweils eine Spule bekannt, die aus einem gefalteten Folienband hergestellt ist, auf das ein Mäander aufgebracht ist. Das Folienband ist dabei einlagig gefaltet. Nachteilig ist dabei ebenfalls, dass derartige Spulen nur eine geringe Induktivität aufweisen.

Aus US 3,736,543 ist ein Verfahren zur Herstellung einer Spule bekannt, bei dem auf einem Substrat beidseitig Flachspulen aufgebracht werden. Dabei sind teilweise jeweils auf einer Seite des Substrats benachbarte Flachspulen elektrisch verbunden; jeweils auf den beiden Seiten des Substrats gegenüberliegende Flachspulen sind miteinander verbunden. Dadurch entsteht eine kontinuierliche Reihenschaltung der auf dem Substrat aufgebrachten elektrisch leitfähigen Strukturen entlang dem gesamten Substrat.

Nachteilig ist dabei, dass mit diesem Verfahren Spulen mit räumlich beliebiger Ausbildung eines Magnetfeldes nicht herstellbar sind. Insbesondere sind mit diesem Verfahren mehrlagige Multipolspulen nicht herstellbar.

Die WO 2007/014570 A1 beschreibt einen elektrischen Motor mit einem elektrischen Spulenkörper und ein Verfahren zur Herstellung des Motors, wobei der elektrische Spulenkörper anhand mindestens eines flexiblen, flächigen Spulenisolierträgers gebildete Wickellagen enthält. Zur Bildung mindestens einer Spulenwicklung sind auf dem mindestens einen Spulenisolierträger elektrische Wicklungsleiterbahnen mindestens eines ersten Spulenstrangs mit einem elektrischen Isolierabstand zueinander zumindest teilweise parallel verlaufend angeordnet.

Weiterhin ist aus der DE 31 48 192 A1 eine elektrische Spule aus Leiterbahnen bekannt, welche zueinander parallel verlaufen und auf einer Isolierstofffolie aufgebracht sind. Die Leiterbahnen bilden miteinander in Reihe geschaltete Spulenabschnitte, indem das Ende eines Spulenabschnittes mit dem Anfang des benachbarten Spulenabschnittes durch eine Faltung an der Isolierstofffolie aufeinander liegend kontaktiert sind. Die Spulenabschnitte sind weiterhin auf einer bandförmigen Isolierstofffolie in Längsrichtung der Isolierstofffolie nebeneinander aufgebracht, wobei jeder Spulenabschnitt aus einer spiralig verlaufenden Leiterbahn besteht, von der mindestens das innere Ende eine Kontaktfläche hat, die mit einer Kontaktfläche des benachbarten Spulenabschnittes kontaktiert ist.

Weitere Spulen und Verfahren zu deren Herstellung, welche aus einem flexiblen, elektrisch isolierenden Substrat und auf dieses aufgebrachten und/oder in dieses eingebrachten Stromleitern gebildet sind, sind aus den Schriften US 5 719 451 A, EP 0 469 609 A1, US 2 911 605 A und US 4 755 783 A bekannt, wobei das Substrat gemeinsam mit dem elektrischen Stromleiter gerollt und/oder gefaltet ist.

Die Aufgabe der Erfindung besteht darin, eine verbessertes Verfahren zur Herstellung einer Spule und eine Spule anzugeben, die insbesondere die im Stand der Technik angegebenen Nachteile überwinden und anhand derer verschiedenste Magnetfelder mit genau definierten, vorgegebenen Feldstrukturen erzeugbar und insbesondere eine Erhöhung der Stromdichte und eine einfache und kostengünstige Konstruktion der Spule erzeugbar sind.

Die Lösung der Aufgabe gelingt erfindungsgemäß durch ein Verfahren mit der Merkmalskombination gemäß Anspruch 1 und durch eine Spule mit der Merkmalskombination gemäß Anspruch 7.

Vorteilhafte Ausgestaltungen der Erfindung sind Gegenstand der abhängigen Ansprüche.

Bei dem erfindungsgemäßen Verfahren zur Herstellung einer Spule wird ein flexibles, elektrisch isolierendes Substrat, auf welches ein Stromleiter aufgebracht oder in welches der Stromleiter eingebracht ist, aufgerollt und/oder gefaltet. Dabei ist es notwendig, dass auch dass Leitermaterial des Stromleiters flexibel ausgeführt ist, d. h. derart ausgebildet ist, dass ein Aufrollen und/oder Falten des elektrisch isolierenden Substrates mit aufgebrachtem oder eingebrachtem Stromleiter keine Beschädigung oder Zerstörung einer Struktur des Stromleiters verursacht.

Das erfindungsgemäße Verfahren sieht dabei vor, dass das flexible, elektrisch isolierende Substrat zu mehreren Lagen mit lagenweise korrespondierenden Abschnitten von Stromleitern aufgerollt und/oder gefaltet wird. Die lagenweise korrespondierenden Abschnitte von Stromleitern können dabei in einer Reihe und/oder parallel auf dem Substrat angeordnet sein. Das Aufbringen der Stromleiter wird insbesondere mit einem lithografischen Herstellungsverfahren ausgeführt, welches einfach realisierbar ist und eine präzise Positionierung der Stromleiter ermöglicht.

Anhand des mehrlagigen Aufrollens und/oder Faltens des flexiblen, elektrisch isolierenden Substrates mit dem aufgebrachten oder eingebrachten Stromleiter wird eine dreidimensionale Leiterstruktur erreicht, so dass bei einer Beaufschlagung mit einem elektrischen Strom in vorteilhafter Weise ein Magnetfeld mit einer genau definierten, vorgegebenen Feldstruktur erzeugbar ist.

Weiterhin sieht das erfindungsgemäße Verfahren vor, dass zwischen den Lagen eine Zwischenschicht, insbesondere ein thermischer Leiter, z. B. ein thermisch leitender Klebstoff, zum Aufnehmen und Abführen thermischer Energie angeordnet wird. Somit ist eine flächige Verbindung der einzelnen Lagen möglich, woraus wiederum in besonders vorteilhafter Weise resultiert, dass eine während des Betriebes der Spule entstehende Wärme effektiv abgeführt wird, so dass trotz eines geringen Leiterfüllfaktors, der in vorteilhafter Weise zu einem geringen Gewicht der Spule führt, eine hohe zulässige Stromdichte erreicht werden kann. Der Leiterfüllfaktor gibt dabei den Anteil des Leitervolumens, z. B. des Volumens von Kupfer, zum Gesamtvolumen der Spule an.

Um eine lagenweise Überprüfung auf Versatz der übereinander liegenden, korrespondierenden Abschnitte von Stromleitern zu ermöglichen , wird gemäß einer bevorzugten Weiterbildung des erfindungsgemäßen Verfahrens eine Markierung, insbesondere eine Markierung pro Umfang auf dem Substrat angeordnet.

Ferner wird vor dem Aufrollen und/oder Falten der Stromleiter zumindest einschichtig auf oder in mindestens eine Seite des flexiblen, elektrisch isolierenden Substrates aufgebracht oder eingebracht. Das heißt, dass auf das flexible, elektrisch isolierende Substrat entweder einseitig oder beidseitig Stromleiter aufgebracht oder eingebracht sind, wobei die Stromleiter ein- oder mehrschichtig ausgeführt sind. Die Stromleiter können dabei derart aufgebracht oder eingebracht werden, dass eine oder mehrere Flachspulen auf einer Lage erzeugt werden. Die Flachspulen können dabei beispielsweise als Spiralspule, Mäanderspule oder als Helixspule mit einem magnetischen Leiter ausgeführt sein.

Weiterhin wird das flexible, elektrisch isolierende Substrat mit dem auf mindestens eine Seite des Substrates aufgebrachten oder eingebrachten Stromleiter vorzugsweise derart aufgerollt, dass die Spule eine zylindrische Form aufweist. Dabei kann es sich beispielsweise um einen Kreiszylinder, einen Quader oder ein Prisma mit einer unterschiedlichen Anzahl von Mantelflächen handeln.

Gemäß einer bevorzugten Weiterbildung des erfindungsgemäßen Verfahrens werden Abstände zwischen den Abschnitten von Stromleitern derart sich vergrößernd ausgebildet, dass beim Aufrollen mit sich lagenweise vergrößerndem Umfang der Lagen korrespondierende Abschnitte von Stromleitern versatzlos übereinander liegen. Das lithografische Herstellungsverfahren ermöglicht es, dass die Lage jedes Stromleiters präzise vorgegeben werden kann. Somit werden Durchkontaktierungen der lagenweise korrespondierenden Abschnitte von Stromleitern verschiedener Lagen an den Kontaktflächen ermöglicht, wobei die Durchkontaktierungen an den Kontaktflächen vertikal zu diesen angeordnet sind.

Besonders vorteilhaft ist es, dass aus dem Aufrollen und/oder Falten des flexiblen, elektrisch isolierenden Substrates mit aufgebrachten oder eingebrachten Stromleitern eine Spule resultiert, die im Vergleich zu herkömmlichen Drahtwicklungen eine verbesserte thermische Leitfähigkeit aufweist. Diese verbesserte Wärmeleitfähigkeit wird zusätzlich zum Einbringen der Zwischenschicht insbesondere dadurch erreicht, dass die einzelnen Lagen der Spule, beispielsweise mittels Pressung, so miteinander verbunden sind, dass keine Lufteinschlüsse innerhalb der Spule existieren.

In einer gewinnbringenden Weiterbildung des erfindungsgemäßen Verfahrens wird ein einzelner Abschnitt des Stromleiters vor dem Aufrollen derart auf das Substrat aufgebracht, dass beim Aufrollen und/oder Falten einer Lage eine zweite Kontaktfläche des Abschnittes des Stromleiters versatzlos über einer ersten Kontaktfläche desselben Abschnittes des Stromleiters liegt, so dass eine einfache elektrische Verschaltung der Kontaktflächen möglich ist.

Werden mehrere Abschnitte des Stromleiters auf das Substrat aufgebracht, erfolgt dies vor dem Aufrollen insbesondere in einer versetzten Anordnung, so dass beim Aufrollen und/oder Falten einer Lage eine zweite Kontaktfläche eines Abschnittes des Stromleiters versatzlos über einer ersten Kontaktfläche eines nachfolgenden Abschnittes des Stromleiters liegt. Dadurch sind wiederum eine einfache elektrische Verschaltung der Kontaktflächen und somit insbesondere eine serielle elektrische Verschaltung mehrerer Abschnitte des Stromleiters möglich, woraus eine Erhöhung einer Amperewindungszahl, d. h. der Stromdichte erzielbar ist. Alternativ werden die Abschnitte der Stromleiter auch elektrisch parallel verschaltet.

Gemäß einer sinnvollen Weiterführung der Erfindung werden Kontaktflächen mehrerer Abschnitte des Stromleiters vor dem Aufrollen derart in einer versetzten Anordnung auf das Substrat aufgebracht, dass beim Aufrollen und/oder Falten mehrerer Lagen eine auf einer äußersten Lage angeordnete zweite Kontaktfläche eines Abschnittes des Stromleiters versatzlos über einer auf einer innersten Lage angeordneten ersten Kontaktfläche eines nachfolgenden Abschnittes des Stromleiters liegt. Die erreichte einfache elektrische Verschaltung der Kontaktflächen ermöglicht in vorteilhafter Weise insbesondere, dass mehrlagige Rollen- oder Faltspulen erzeugbar sind.

Die erfindungsgemäße Spule, welche insbesondere nach dem erfindungsgemäßen Verfahren und dessen Ausgestaltung hergestellt ist, zeichnet sich erfindungsgemäß dadurch aus, dass ein flexibles, elektrisch isolierendes Substrat, auf welches ein Stromleiter aufgebracht oder in welches der Stromleiter eingebracht ist, derart aufgerollt und/oder gefaltet ist, dass Stromleiter eine dreidimensionale Leiterstruktur bilden, so dass bei einer Beaufschlagung der Stromleiter mit einem elektrischen Strom ein Magnetfeld mit einer vorgegebenen Feldstruktur erzeugbar ist. Dabei sind mehrere Lagen mit lagenweise korrespondierenden Abschnitten von Stromleitern aufrollbar und/oder faltbar, so dass über den Umfang der Spule ein oder mehrere korrespondierenden Abschnitte von Stromleitern auf jeder Lage angeordnet sind.

Weiterhin ist erfindungsgemäß zwischen den Lagen eine Zwischenschicht, insbesondere ein thermischer Leiter zum Aufnehmen und Abführen thermischer Energie angeordnet ist, so dass eine während des Betriebes der Spule entstehende Wärme effektiv abführbar ist. Somit kann trotz eines geringen Leiterfüllfaktors, der in vorteilhafter Weise zu einem geringen Gewicht der Spule führt, eine hohe zulässige Stromdichte erreicht werden.

Erfindungsgemäß ist weiterhin vorgesehen, dass ein Versatz übereinander liegender korrespondierender Abschnitte von Stromleitern lagenweise mittels einer Korrektur ausgeglichen wird, wobei diese Korrektur speziell anhand einer Variierung einer Stärke der zwischen den einzelnen Lagen angeordneten Zwischenschicht vorgenommen wird. Dazu wird beispielsweise eine variable Menge an Klebstoff zwischen den einzelnen Lagen angeordnet.

Alternativ oder zusätzlich ist es ebenfalls möglich, die Zwischenschicht zumindest in Teilabschnitten zwischen den einzelnen Lagen, d. h. nicht den gesamten Umfang einer Lage umfassend, anzuordnen.

Aufgrund dieses versatzlosen Übereinanderliegens, sind die Stromleiter und/oder die korrespondierenden Abschnitte von Stromleitern lagenweise anhand von Kontaktflächen elektrisch verbindbar.

Dabei ist eine Lage mit einem oder mehreren lagenweise korrespondierenden Abschnitten von Stromleitern ausgeführt, wobei die lagenweise korrespondierenden Abschnitte von Stromleitern in einer Reihe und/oder parallel angeordnet sind. Somit sind verschiedenste Magnetfelder mit der Spule erzeugbar bzw. ist diese anhand der Anordnung der Stromleiter in einfacher und effektiver Weise an eine gewünschte Anwendung anpassbar.

Dabei können die Stromleiter einer Lage untereinander und/oder lagenweise korrespondierende Abschnitte von Stromleitern einer Lage und/oder verschiedener Lagen an Kontaktflächen elektrisch miteinander verbunden werden. Somit ist es möglich, die Stromleiter je nach vorgegebenen Anforderungen so elektrisch zu verschalten, dass beispielsweise bei einer zyklischen Anordnung der lagenweise korrespondierenden Stromleiter ein Multipol, z. B. ein Dipol, ein Kreuzdipol, ein Quadrupol oder ein Hexapol mit der aufgerollten Spule realisierbar ist. Diese Schaltungsanordnungen sind mit herkömmlichen Spulenanordnungen nur sehr aufwändig, dagegen mit der vorliegenden Erfindung einfach und kostengünstig umsetzbar.

Die verschiedenen Lagen der Spule sind vorzugsweise punktuell und/oder flächig stoffschlüssig, kraftschlüssig oder formschlüssig, insbesondere mittels Niet-, Schweiß-, Löt- oder Klebetechniken miteinander verbunden. Diese Verbindung stellt sicher, dass die gebildete Spule die gewünschte Form über ihre gesamte Lebensdauer beibehält. Weiterhin ist durch die Verbindung sichergestellt, dass sich während des Betriebes der Spule, beispielsweise durch Wärmeentwicklung kein Versatz zwischen den übereinander liegenden, korrespondierenden Abschnitten von Stromleitern bildet.

Weiterhin ist eine lagenweise Überprüfung auf Versatz der übereinander liegenden, korrespondierenden Abschnitte von Stromleitern anhand einer Verwendung von Markierungen, insbesondere einer Markierung pro Umfang, erzielbar. Dazu sind auf dem flächigen Substrat insbesondere Justagemarken oder Justagelöcher eingebracht, die neben einer Verwendung als Markierung in vorteilhafter Weise gleichzeitig als Verbindungspunkte der einzelnen Lagen mittels Niet-, Schweiß-, Löt- oder Klebetechniken verwendbar sind.

Ein Versatz übereinander liegender korrespondierender Abschnitte von Stromleitern ist erfindungsgemäß lagenweise mittels einer Korrektur ausgleichbar, wobei diese Korrektur speziell anhand einer Variierung einer Stärke der zwischen den einzelnen Lagen angeordneten Zwischenschicht vornehmbar ist. Dazu ist beispielsweise eine variable Menge an Klebstoff zwischen den einzelnen Lagen anordbar.

Alternativ oder zusätzlich ist es ebenfalls möglich, die Zwischenschicht zumindest in Teilabschnitten zwischen den einzelnen Lagen, d. h. nicht den gesamten Umfang einer Lage umfassend, anzuordnen.

Aufgrund dieses versatzlosen Übereinanderliegens, sind die Stromleiter und/oder die korrespondierenden Abschnitte von Stromleitern lagenweise anhand von Kontaktflächen elektrisch verbindbar.

Hierzu sind in einer gewinnbringenden Ausgestaltung der erfindungsgemäßen Spule Durchkontaktierungen an den Kontaktflächen vorgesehen, welche vertikal zu den Kontaktflächen angeordnet sind und die lagenweise korrespondierenden Abschnitte von Stromleitern verschiedener Lagen elektrisch verbinden. Der Vorteil der Durchkontaktierungen liegt insbesondere darin, dass die Spule bei Verwendung dieser besonders kleinbauend ausführbar ist.

Alternativ oder zusätzlich sind von den Kontaktflächen aus über einen Längsrand des Substrates überstehende Fahnen ausgebildet, mittels derer die lagenweise korrespondierenden Abschnitte von Stromleitern verschiedener Lagen elektrisch miteinander verbindbar sind und die Spule von außen in einfacher Weise elektrisch kontaktierbar ist.

In einer weiteren Ausgestaltung der Erfindung sind das Substrat und die Abschnitte des Stromleiters vor dem Aufrollen einfach oder mehrfach um zumindest eine Faltlinie derart gefaltet, dass die Kontaktflächen über den Längsrand des Substrates herausgeführt sind und dass die Kontaktflächen die Abschnitte des Stromleiters der innersten Lage und der äußeren Lage versatzlos übereinander liegen. Dadurch sind das Substrat und die Abschnitte des Stromleiters um die Faltlinie auf die Vorderseite und/oder die Rückseite des Substrates gefaltet, so dass eine Vielzahl möglicher Anordnungen und elektrischer Verschaltungen möglich sind.

Die überstehenden Fahnen sind dabei zur elektrischen Kontaktierung der lagenweise korrespondierenden Abschnitte von Stromleitern verschiedener Lagen oder zu einer elektrischen Kontaktierung von außen mittels eines Löt-, Bond-, Klebe- und/oder eines Klemmverfahrens elektrisch verbunden.

Zusätzlich sind in die Lagen des Substrates vor dem Aufrollen und/oder Falten jeweils eine oder mehrere Materialaussparungen derart einbringbar, dass diese nach dem Aufrollen und/oder Falten versatzlos übereinander liegen, wobei in vorteilhafter Weise die Abschnitte des Stromleiters vor dem Aufrollen und/oder Falten derart auf die Vorderseite und/oder die Rückseite des Substrates aufgebracht sind, dass eine oder mehrere die Materialaussparungen umgebende Flachspulen auf einer Lage des Substrates erzeugt werden. Die direkt übereinander angeordneten Flachspulen der Vorderseite und/oder der Rückseite einer Lage sowie die nach dem Aufrollen und/oder Falten direkt übereinander angeordneten Flachspulen benachbarter Lagen sind elektrisch miteinander verbunden. Daraus ergibt sich die Möglichkeit, Faltspulen und/oder Rollenspulen zu erzeugen, mittels derer dreidimensionale Magnetfelder erzeugbar sind und welche sich beispielsweise zum Einsatz als Statorspule in einem Elektromotor eignen. Die Materialaussparungen sind sowohl vor als auch nach dem Aufrollen und/oder Falten des Substrates in dieses einbringbar.

In die Spule können zusätzlich Hohlräume eingebracht sein, in denen weichmagnetische und/oder hartmagnetische Elemente anordbar sind. Diese Hohlräume entstehen entweder vor dem Aufrollen und/oder Falten durch Einbringen von Hohlräumen in das flexible, elektrisch isolierende Substrat oder nach dem Aufrollen und/oder Falten, z. B. durch Einbringen mittels eines Bohrers oder eines Lasers.

Weiterhin können Eisenkreisteile teilweise und/oder vollständig eingearbeitet sein. Diese sind beim Aufrollen und/oder Falten von dem Substrat vollständig umwickelbar oder nach dem Aufrollen und/oder Falten in Hohlräume, die gemäß den Hohlräumen für die weichmagnetischen und/oder hartmagnetischen Elemente erzeugbar sind, einbringbar.

Aus dem gezielten Einbringen von weich- und/oder hartmagnetischen Elementen sowie von Eisenkreisteilen resultiert der Vorteil, dass ein Verlauf und die Größe eines magnetischen Flusses bei der Herstellung der Spule beeinflusst bzw. vorgegeben werden kann.

Während des Aufrollens und/oder Faltens der Spule können elektrische Bauelemente, z. B. ohmsche Widerstände, Kapazitäten oder Transistoren, in die Spule eingearbeitet und mit den Kontaktflächen der Stromleiter elektrisch verbunden werden. Somit sind bei der Herstellung der Spule komplexe elektrische Schaltungen kleinbauend realisierbar. Die elektrischen Bauelemente sind alternativ und/oder zusätzlich auch nach dem Aufrollen so an der Spule anordbar, dass diese mittels der überstehenden Fahnen elektrisch mit den Stromleitern verbindbar sind.

Die Erfindung wird im Folgenden anhand von Ausführungsbeispielen näher erläutert.

Dabei zeigen:
- Fig. 1: schematisch einen als Flachspule auf ein Substrat aufgebrachten Stromleiter,
- Fig. 2: schematisch eine periodische Anordnung von als Flachspule auf ein Substrat aufgebrachten Stromleitern,
- Fig. 3A: schematisch eine aufgerollte Spule,
- Fig. 3B: schematisch eine aufgerollte Multipolspule,
- Fig. 4: schematisch eine Helixspule,
- Fig. 5: schematisch eine aufgerollte Spule mit Hohlräumen,
- Fig. 6A: schematisch eine mögliche Ausführungsformen einer aufgerollten Spule als Prisma,
- Fig. 6B: schematisch eine mögliche Ausführungsformen einer aufgerollten Spule als Quader,
- Fig. 7A: schematisch einen einzelnen, auf ein Substrat aufgebrachten Abschnitt eines Stromleiters,
- Fig. 7B: schematisch den Stromleiter und das Substrat gemäß Figur 1 als einlagig aufgerollte Spule,
- Fig. 8: schematisch mehrere versetzt auf dem Substrat angeordnete Stromleiter,
- Fig. 9: schematisch mehrere auf dem Substrat angeordnete Stromleiter mit versetzt aufgebrachten Kontaktflächen,
- Fig. 10: schematisch eine Schnittdarstellung einer mehrlagig aufgerollten Spule mit Durchkontaktierungen,
- Fig. 11: schematisch mehrere gekreuzt auf das Substrat aufgebrachte Stromleiter mit als herausgeführte Fahnen ausgebildeten Kontaktflächen,
- Fig. 12: schematisch ein Substrat mit auf einer Vorderseite und auf einer Rückseite angeordneten, als herausgeführte Fahnen ausgebildeten Kontaktflächen,
- Fig. 13: schematisch eine mehrlagig aufgerollte Spule mit herausgeführten Fahnen,
- Fig. 14A: schematisch ein Substrat mit mehreren aufgebrachten Abschnitten von Stromleitern und zwei eingebrachten Faltlinien,
- Fig. 14B: schematisch das Substrat mit mehreren aufgebrachten Abschnitten von Stromleitern gemäß Figur 8A in einem gefalteten Zustand,
- Fig. 15: schematisch ein Substrat mit mehreren aufgebrachten Abschnitten von Stromleitern als herausgeführte Fahnen ausgebildeten Kontaktflächen und mittels Falten herausgeführten Kontaktflächen,
- Fig. 16A: schematisch ein Substrat mit mehreren aufgebrachten Abschnitten von Stromleitern und mehreren eingebrachten Faltlinien,
- Fig. 16B: schematisch das mehrfach gemäß Figur 10A gefaltete Substrat,
- Fig. 17A: schematisch ein Schnittbild einer ersten Ausführungsform eines Läufers und eines Stators eines linearen elektrodynamischen Motors mit zylindrischer Bauform,
- Fig. 17B: schematisch ein Schnittbild einer zweiten Ausführungsform eines Läufers und eines Stators eines linearen elektrodynamischen Motors mit zylindrischer Bauform,
- Fig. 17C: schematisch ein Schnittbild einer dritten Ausführungsform eines Läufers und eines Stators eines linearen elektrodynamischen Motors mit zylindrischer Bauform,
- Fig. 17D: schematisch ein Schnittbild einer vierten Ausführungsform eines Läufers und eines Stators eines linearen elektrodynamischen Motors mit zylindrischer Bauform,
- Fig. 18: schematisch mehrere auf einer Vorderseite und einer Rückseite eines Substrates angeordnete Abschnitte von Stromleitern zur Verwendung in einem Läufer gemäß Figur 11D,
- Fig. 19A: schematisch eine periodische Anordnung von als Flachspule auf ein Substrat aufgebrachten Stromleitern,
- Fig. 19B: schematisch eine aus dem Substrat gemäß Figur 13A gebildete aufgerollte Spule,
- Fig. 20A: schematisch eine periodische Anordnung von als Flachspule auf ein mit Faltlinien versehenes Substrat aufgebrachten Stromleitern, und
- Fig. 20B: schematisch eine Schnittdarstellung einer aus dem Substrat gemäß Figur 14 gebildeten gefalteten Spule.

Einander entsprechende Teile sind in allen Figuren mit den gleichen Bezugszeichen versehen.

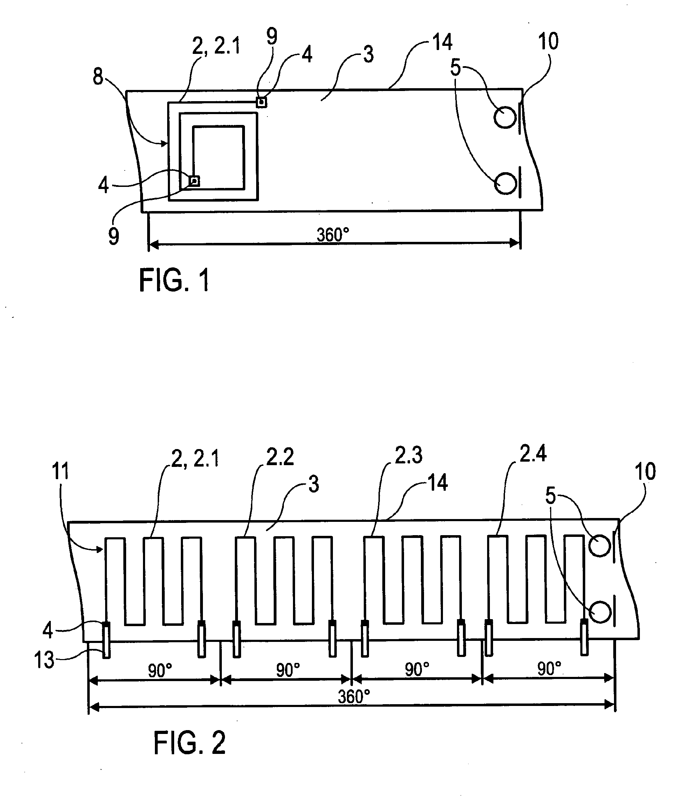

Figur 1 zeigt einen als Flachspule auf ein flexibles, elektrisch isolierendes Substrat 3 aufgebrachten Stromleiter 2. In einer Ausgestaltung der Erfindung kann der Stromleiter 2 alternativ in das flexible, elektrisch isolierende Substrat 3 eingebracht sein. Wie Figur 1 zeigt, ist die Flachspule als Spiralspule 8 ausgebildet und stellt einen Abschnitt 2.1 des Stromleiters 2 dar. Der Stromleiter 2 ist einseitig und einschichtig, insbesondere mittels eines lithografischen Verfahrens, auf das Substrat 3 aufgebracht. In einer Ausgestaltung der Erfindung kann der Stromleiter 2 jedoch auch beidseitig und/oder mehrschichtig auf das Substrat 3 aufgebracht werden.

Gezeigt ist eine Lage des Substrates 3 mit aufgebrachtem Stromleiter 2. Zur Herstellung der erfindungsgemäßen Spule 1 werden mehrere Lagen des Substrates 3 mit aufgebrachten Stromleitern 2 aufgerollt. Dabei ist es notwendig, dass auch das Leitermaterial des Stromleiters 2 flexibel ausgeführt ist, d. h. derart ausgebildet ist, dass ein Aufrollen des Substrates 3 mit aufgebrachtem Stromleiter 2 keine Beschädigung oder Zerstörung einer Struktur des Stromleiters 2 verursacht. Auf jeder Lage des Substrates 3 kann ein Stromleiter 2 oder, wie Figur 2 zeigt, mehrere Stromleiter 2 in einer Reihe angeordnet sein. Es ist alternativ oder zusätzlich möglich, dass die Stromleiter 2 parallel angeordnet sind.

Die Stromleiter 2 weisen Kontaktflächen 4 auf, an denen mehrere Stromleiter 2 einer einzelnen Lage, eine Gruppe von Stromleitern 2 einer einzelnen Lage oder Stromleiter 2 verschiedener Lagen elektrisch miteinander verbunden werden. Um die Kontaktflächen 4 mehrerer Stromleiter 2 auf unterschiedlichen Lagen des Substrates 3 elektrisch miteinander zu verbinden, wird eine Durchkontaktierung 9 (= Via; aus dem Englischen: Vertical Interconnect Access) verwendet.

Zu einer Anwendung der Durchkontaktierung 9 ist es notwendig, dass Kontaktflächen 4 der Stromleiter 2 ohne Versatz übereinander liegen. Dazu sind in dem Substrat 3 am Ende einer Lage (= 360°) Markierungen 10 angeordnet, die insbesondere als Justagemarken oder Justagelöcher ausgeführt sind. Somit kann bei dem Aufrollen des Substrates 3 sichergestellt werden, dass die Stromleiter 2 ohne Versatz übereinander liegen. Die Markierungen 10 können gleichzeitig als Verbindungspunkt einer nicht näher dargestellten punktuellen Verbindung der einzelnen Lagen des Substrates 3 mittels Niet-, Schweiß-, Löt- oder Klebetechniken verwendet werden.

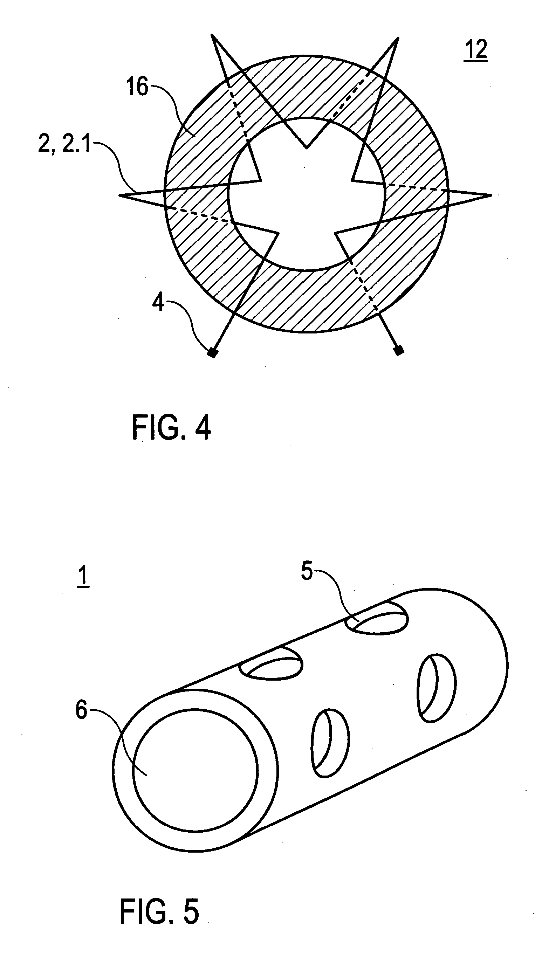

Eine Korrektur der Anordnung der einzelnen Lagen kann mittels einer Variation einer Stärke einer in Figur 4 dargestellten Zwischenschicht 7 durchgeführt werden, so dass ein möglicherweise auftretender Versatz der übereinander liegenden Stromleiter 2 ausgeglichen wird.

Alternativ oder zusätzlich kann die Zwischenschicht 7 auch in Teilabschnitten zwischen den Lagen, d. h. nicht auf dem gesamten Umfang zwischen den Lagen angeordnet sein, wodurch ebenfalls ein Versatz übereinander liegenden Stromleiter 2 verschiedener Lagen korrigierbar ist.

In das Substrat 3 können vor dem Aufrollen Hohlräume 5 eingebracht werden, in denen nicht näher dargestellte weichmagnetische und/oder hartmagnetische Elemente und/oder Eisenkreisteile angeordnet werden können. Diese Hohlräume 5 können alternativ und/oder zusätzlich auch nach dem Aufrollen in die Spule 1 eingebracht werden.

Weiterhin können an den Kontaktflächen 4 der Stromleiter 2 nicht näher dargestellte elektrische Bauelemente, wie beispielsweise Kapazitäten, ohmsche Widerstände oder Transistoren elektrisch mit den Stromleitern 2 verbunden werden. Die Bauelemente werden bei dem Aufrollen des Substrates 3 und der Stromleiter 2 mit aufgerollt und sind somit in die Spule 1 integriert Alternativ oder zusätzlich können die elektrischen Bauelemente auch nach dem Aufrollen von außen an der Spule 1 angeordnet werden.

Figur 2 stellt eine periodische Anordnung von als Flachspule auf das Substrat 3 aufgebrachten Stromleitern 2 dar, wobei jede Flachspule einen Abschnitt 2.1 bis 2.4 des Stromleiters bildet. Dabei sind vier als Mäanderspule 11 ausgebildete Flachspulen in einer Reihe auf einer Lage des Substrates 3 angeordnet. Die Flachspulen können jedoch alternativ auch als Spiralspule 8 gemäß Figur 1 oder als Helixspule 12 gemäß Figur 4 ausgebildet sein.

Die Herstellung der Spule 1 erfolgt gemäß der in Figur 1 dargestellten Spule 1 mit dem Unterschied, dass zu der in Figur 1 dargestellten Lage des Substrates 3 mit aufgebrachtem Stromleiter 2 die Kontaktflächen 4 als Fahnen 13 über einen Längsrand 14 des Substrates 3 überstehend ausgebildet sind. Mittels dieser Fahnen 13 können die Stromleiter 2 und/oder Gruppen von Stromleitern 2 auf einer Lage oder auf unterschiedlichen Lagen des Substrates 3 elektrisch miteinander verbunden werden. Weiterhin ist es möglich, anhand der Fahnen 13 die aufgerollte Spule 1 nach außen, z. B. mit einem elektrischen Schaltkreis oder mit elektrischen Bauelementen, zu verbinden. Die elektrische Verbindung erfolgt dabei beispielsweise anhand eines Löt-, Bond-, Klebeverfahrens und/oder eines Klemmverfahrens.

Anhand der dargestellten periodischen/zyklischen Anordnung der Flachspulen kann bei dem Aufrollen des Substrates 3 und der Stromleiter 2 in einfacher Weise ein Multipol, hier insbesondere ein Quadrupol, hergestellt werden. Durch eine Variation der Flachspulenanzahl und eine Variation der elektrischen Verschaltung der einzelnen Flachspulen ist es möglich, verschiedene weitere Multipole, z. B. Dipole, Kreuzdipole oder Hexapole herzustellen.

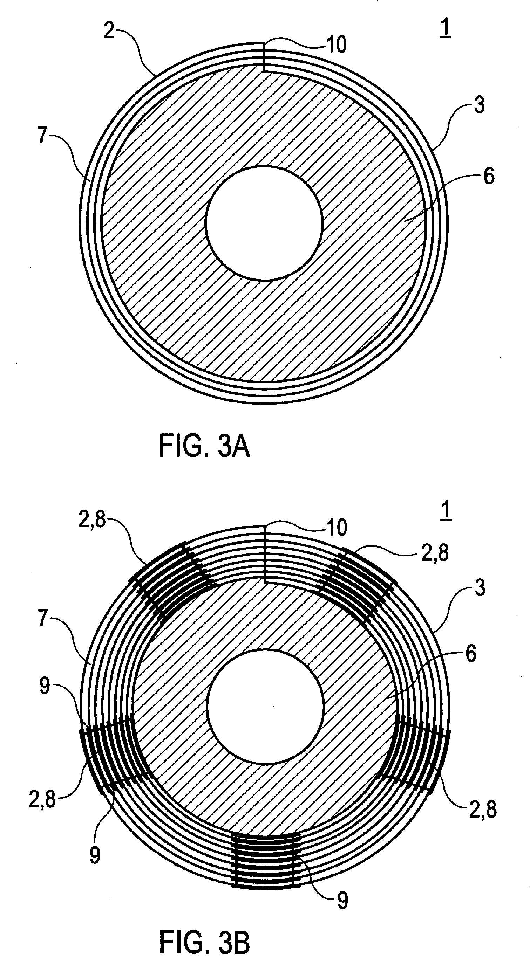

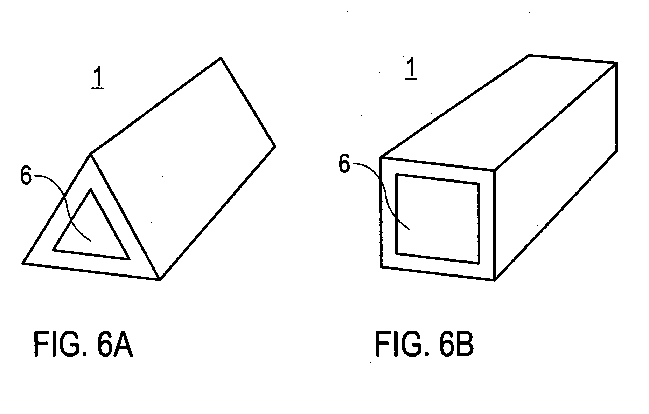

Figur 3A zeigt eine aufgerollte Spule 1, die eine kreisförmige Grundform aufweist. Dabei sind das Substrat 3 und die Stromleiter 2 um einen zylinderförmigen Grundkörper 6 gerollt. Die aufgerollte Spule 1 kann alternativ zu einer Ausbildung als Kreiszylinder als ein Quader, gemäß Figur 6b, oder als ein Prisma mit einer unterschiedlichen Anzahl von Mantelflächen, gemäß Figur 6a, ausgebildet sein.

Zwischen den einzelnen Lagen des Substrates 3 mit aufgebrachten Stromleitern 2 ist eine Zwischenschicht 7 angeordnet. Anhand einer Variation der Stärke der Zwischenschicht 7 kann einerseits ein Versatz der übereinander liegenden Stromleiter 2, durch Überprüfung der Markierungen 10, ausgeglichen werden. Andererseits ist mittels der Zwischenschicht 7 eine flächige Verbindung der einzelnen Lagen möglich. Dazu ist die Zwischenschicht beispielsweise als thermisch leitfähiger Klebstoff ausgebildet, der gleichzeitig eine thermische Energie der Stromleiter 2 aufnimmt und diese an die Umgebung der Spule 1 abgibt. Somit kann trotz eines geringen Leiterfüllfaktors der Spule 1 eine Beaufschlagung der Stromleiter 2 mit einem hohen elektrischen Strom, d. h. eine hohe Stromdichte realisiert werden.

Durch das Aufrollen wird ferner eine dreidimensionale Leiterstruktur erreicht, so dass bei einer Beaufschlagung der Stromleiter 2 mit dem elektrischen Strom in vorteilhafter Weise mittels der Spule 1 ein Magnetfeld mit einer genau definierten, vorgegebenen Feldstruktur erzeugbar ist.

Figur 3B zeigt eine aufgerollte Spule 1, welche als mehrlagig aufgerollte Multipolspule ausgebildet ist. Zu dieser Ausbildung sind im dargestellten Ausführungsbeispiel der Erfindung mehrere Lagen des Substrates 3 mit auf dieses aufgebrachten Spiralspulen 8 gemäß Figur 1 aufgerollt, wobei die Spiralspulen 8 ohne Versatz übereinander liegen und mittels Durchkontaktierungen 9 zu fünf symmetrisch angeordneten Spulenelementen verschaltet sind. Die daraus resultierende dreidimensionale Leiterstruktur der Multipolspule ermöglicht bei einer Beaufschlagung mit elektrischem Strom die Erzeugung eines Magnetfeldes mit einer genau definierten, vorgegebenen Feldstruktur.

In einer Ausgestaltung der Erfindung sind in einem Bereich des Substrates 3, welcher sich zwischen dem als Flachspule, insbesondere Spiralspule 8, ausgebildeten Stromleitern 2 Hohlräume 5 eingebracht, in welche insbesondere Eisenkreisteile zur Steuerung des magnetischen Flusses einbringbar sind.

Figur 4 zeigt eine Flachspule, die als Helixspule 12 ausgeführt ist. Die Helixspule 12 entsteht durch eine Wicklung von Stromleitern 2 um einen flexibel ausgebildeten magnetischen Leiter 15. Die so entstehende Flachspule, insbesondere Helixspule 12, wird, wie unter Figur 1 und Figur 2 beschrieben, auf das Substrat 3 aufgebracht und zu einer Spule 1 aufgerollt.

Figur 5 stellt eine aufgerollte Spule 1 mit eingebrachten Hohlräumen 5 dar. Die aufgerollte Spule 1 wird gemäß den Beschreibungen der Figuren 1 bis 4 hergestellt. In den vor dem Aufrollen oder nach dem Aufrollen eingebrachten Hohlräumen 5 können weich- und/oder hartmagnetische Werkstoffe und/oder Eisenkreisteile angeordnet und somit in vorteilhafter Weise ein magnetischer Fluss der Spule vorgegeben und/oder beeinflusst werden.

Figur 6A stellt die Spule 1, die gemäß den Beschreibungen der Figuren 1 bis 5 hergestellt wurde, in der Form eines Prismas mit drei Mantelflächen dar. Dabei werden die einzelnen Lagen des Substrates 3 mit aufgebrachten Stromleitern 2 um einen magnetischen oder nichtmagnetischen prismatischen Grundkörper 6 gewickelt. Das Prisma kann in einer weiteren Ausgestaltung der Erfindung jedoch auch über mehr als drei Mantelflächen verfügen. Auch können zusätzlich nicht dargestellte Hohlräume 5 in die Spule 1 eingebracht werden, die weich- und/oder hartmagnetische Elemente und/oder Eisenkreisteile aufnehmen.

Figur 6B stellt die Spule 1, die gemäß den Beschreibungen der Figuren 1 bis 5 hergestellt wurde, in der Form eines Quaders dar. Dabei werden die einzelnen Lagen des Substrates 3 mit aufgebrachten Stromleitern 2 um einen magnetischen oder nichtmagnetischen quaderförmigen Grundkörper 6 gewickelt. Auch hier können zusätzlich nicht dargestellte Hohlräume 5 in die Spule 1 eingebracht werden, die weich- und/oder hartmagnetische Elemente und/oder Eisenkreisteile aufnehmen.

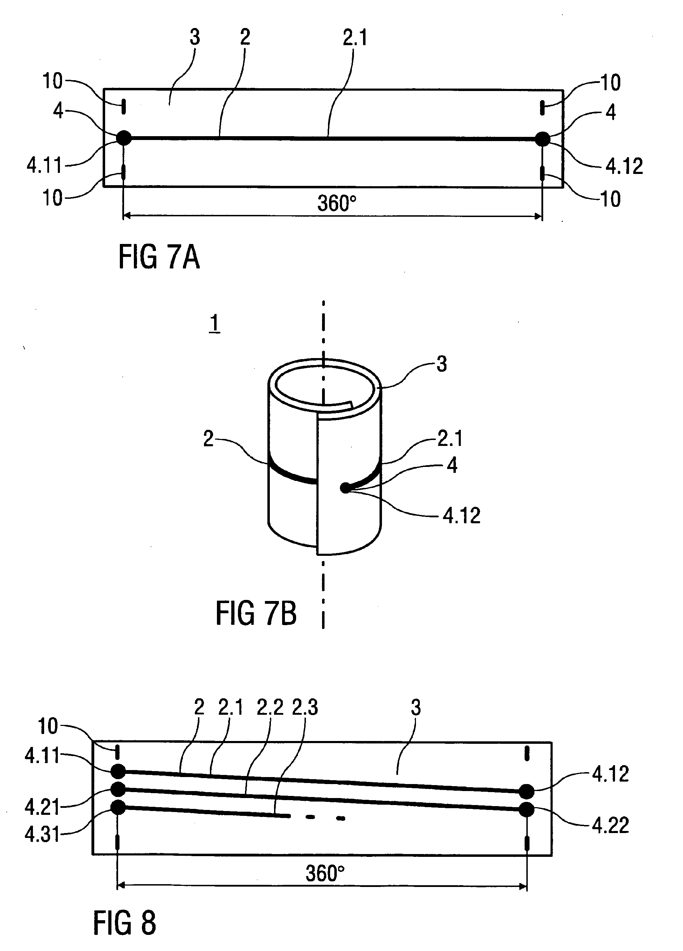

Figur 7A zeigt einen einzelnen, auf das elektrisch isolierendes Substrat 3 aufgebrachten Abschnitt 2.1 des Stromleiters 2. Alternativ kann der Stromleiter 2 auch in das Substrat 3 eingebracht sein.

Der Stromleiter 2 ist einseitig und einschichtig, insbesondere mittels eines lithografischen Verfahrens, auf das Substrat 3 aufgebracht. Der Stromleiter 2 kann jedoch auch beidseitig und/oder mehrschichtig auf dem Substrat 3 angeordnet sein.

Dabei ist der einzelne Abschnitt 2.1 des Stromleiters 2 derart auf das Substrat 3 aufgebracht, dass bei einem Aufrollen und/oder Falten des Substrates 3 und des Stromleiters 2 ein zweite Kontaktfläche 4.12 des Abschnittes 2.1 des Stromleiters 2 versatzlos über einer ersten Kontaktfläche 4.11 desselben Abschnittes 2.1 liegt.

Zu einer lagenweisen Überprüfung auf Versatz der übereinander liegenden Kontaktflächen 4 sind wiederum Markierungen 10, insbesondere eine Markierung 10 pro Umfang, d. h. pro Lage (= 360°) auf dem Substrat 3 angeordnet.

In Figur 7B ist eine aus dem in Figur 1A gezeigten Substrat 3 mit aufgebrachtem Stromleiter 2 gebildete, einlagig gerollte Spule 1 dargestellt. Eine elektrische Kontaktierung der Kontaktflächen 4.11, 4.12 des Abschnittes 2.1 des Stromleiters 2 ist vorzugsweise mittels Durchkontaktierungen 9 ausführbar.

Durch die sehr gute Wärmeabgabe der dargestellten Anordnung kann eine hohe Stromtragfähigkeit des Stromleiters 2 und der aus diesem und dem Substrat 3 gebildeten Spule 1 erzielt werden. Um dagegen die Amperewindungszahl der Spule 1 weiter zu erhöhen, sind auf einer Lage (= 360°) des Substrates 3 mehrere Abschnitte 2.1, 2.2, 2.3 eines Stromleiters 2 anordbar.

Wie Figur 8 zeigt, sind die Abschnitte 2.1, 2.2, 2.3 des Stromleiters 2 parallel zueinander auf dem Substrat 3 angeordnet. Um das versatzlose Übereinanderliegen der Kontaktflächen 4 der Abschnitte 2.1, 2.2, 2.3 nach dem Aufrollen und/oder Falten zu erreichen, sind die Abschnitte 2.1, 2.2, 2.3 des Stromleiters 2 insbesondere in der gezeigten versetzten Anordnung auf das Substrat 3 aufgebracht.

Dabei sind die Abschnitte 2.1, 2.2, 2.3 derart versetzt angeordnet, dass beim Aufrollen und/oder Falten einer Lage des Substrates 3 die zweite Kontaktfläche 4.12 oder 4.22 eines Abschnittes 2.1 oder 2.2 versatzlos über der ersten Kontaktfläche 4.21 oder 4.31 des nachfolgenden Abschnittes 2.2 oder 2.3 des Stromleiters 2 liegt.

Dadurch ist es in vorteilhafter Weise möglich, eine elektrische Reihenschaltung der einzelnen Abschnitte 2.1, 2.2, 2.3 des Stromleiters 2 zu realisieren und somit die Amperewindungszahl signifikant zu steigern. Die elektrische Verschaltung der Kontaktflächen 4 ist wiederum mittels Durchkontaktierungen 9 realisierbar.

In einer nicht näher dargestellten Ausgestaltung der Erfindung besteht weiterhin die Möglichkeit, mehr als die drei dargestellten Abschnitte 2.1, 2.2, 2.3 des Stromleiters 2 auf einer oder mehreren Lagen anzuordnen, so dass die Amperewindungszahl der resultierenden Spule 1 je nach Anforderung weiter vergrößerbar ist.

Um eine elektrische Reihenschaltung mehrerer Abschnitte 2.1, 2.2, 2.3 des Stromleiters 2 über mehrere aufgerollte Lagen (= N*360°) zu ermöglichen, ist ein elektrischer Strom von einem Abschnitt 2.1, 2.2 oder 2.3 auf einer äußersten Lage auf einen Abschnitt 2.1, 2.2 oder 2.3 einer innersten zurückzuführen.

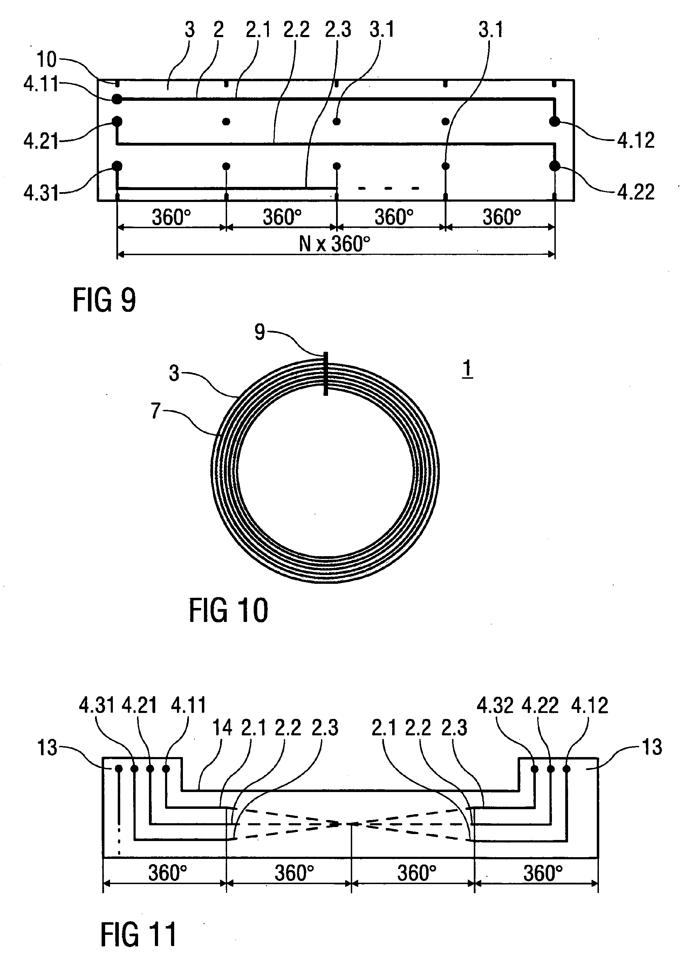

Zu diesem Zweck sind gemäß Figur 9 die Kontaktflächen 4 mehrerer Abschnitte 2.1, 2.2, 2.3 des Stromleiters 2 derart versetzt auf das Substrat 3 aufgebracht, dass bei einem Aufrollen und/oder Falten mehrerer Lagen eine auf der äußersten Lage angeordnete zweite Kontaktfläche 4.12 oder 4.22 eines Abschnittes 2.1 oder 2.2 des Stromleiters 2 versatzlos über einer auf einer innersten Lage angeordneten ersten Kontaktfläche 4.21 oder 4.31 eines nachfolgenden Abschnittes 2.2 oder 2.3 des Stromleiters 2 liegt.

Zu einer Führung des elektrischen Stromes von der äußersten zu der innersten Lage mittels der elektrischen Kontaktierung der Kontaktflächen 4 über Durchkontaktierungen 9 sind gemäß einer sinnvollen Weiterführung der Erfindung in das Substrat 3 Durchführungen 3.1 eingebracht. Diese können beispielsweise mittels eines Stanzverfahrens im Substrat 3 erzeugt werden.

Sowohl beim Einbringen der Durchführungen 3.1 in das Substrat 3 als auch bei der Anordnung der Abschnitte 2.1, 2.2, 2.3 des Stromleiters 2 und der zugehörigen Kontaktflächen 4 ist der zunehmende Umfang mit jeder Lage des Substrates 3 zu beachten, so dass ein Abstand zwischen den Durchführungen 3.1 mit zunehmenden Lagen vergrößert werden muss.

In einer vorteilhaften Ausgestaltung der Erfindung bietet sich die in Figur 9 dargestellte Anordnung insbesondere zu einer beiderseitigen Anordnung des Stromleiters 2 auf dem Substrat 2 und somit zu einer weiteren Erhöhung der Amperewindungszahl und/oder zur Erzeugung komplexer Schaltungen auf dem Substrat 3 an.

Figur 10 zeigt eine mehrlagig aufgerollte Spule 1 (im Weiteren auch Rollspule genannt) mit mehreren anhand von Durchkontaktierungen 9 elektrisch verbundenen Abschnitten 2.1, 2.2, 2.3 eines Stromleiters 2. Dabei ist das Aufrollen der einzelnen Lagen derart durchzuführen, dass die Kontaktflächen 4 versatzlos übereinander liegen.

Zwischen den einzelnen Lagen des Substrates 3 mit aufgebrachten Stromleitern 2 ist die Zwischenschicht 7 angeordnet, wobei anhand der bereits beschriebenen Variation der Stärke der Zwischenschicht 7 und/oder deren Anordnung in Teilabschnitten einerseits der Versatz der übereinander liegenden Kontaktflächen 4 in Verbindung mit der Überprüfung der Markierungen 10 ausgeglichen werden.

Andererseits ist mittels der Zwischenschicht 7 eine flächige Verbindung der einzelnen Lagen möglich, so dass diese eine thermische Energie der Stromleiter 2 aufnimmt und diese an die Umgebung der Spule 1 abgibt. Somit kann trotz eines geringen Leiterfüllfaktors der Spule 1 eine Beaufschlagung der Stromleiter 2 mit einem hohen elektrischen Strom, d. h. einer hohen Stromdichte realisiert werden.

Neben der Verwendung von Durchkontaktierungen 9 zur elektrischen Verschaltung der Kontaktflächen 4 sind gemäß einer in Figur 11 dargestellten, sinnvollen Weiterführung der Erfindung von den Kontaktflächen 4 aus über einen Längsrand 14 des Substrates 3 ausgebildete Fahnen 13 verwendbar.

Um eine elektrische Reihenschaltung der Abschnitte 2.1, 2.2, 2.3, d. h. der Kontaktflächen 4 der innersten Lage und der äußersten Lage zu erzielen, müssen einerseits die Kontaktflächen 4 versatzlos übereinander angeordnet sein und andererseits die Abschnitte 2.1, 2.2, 2.3 der Stromleiter 2 gekreuzt auf das Substrat 2 aufgebracht sein.

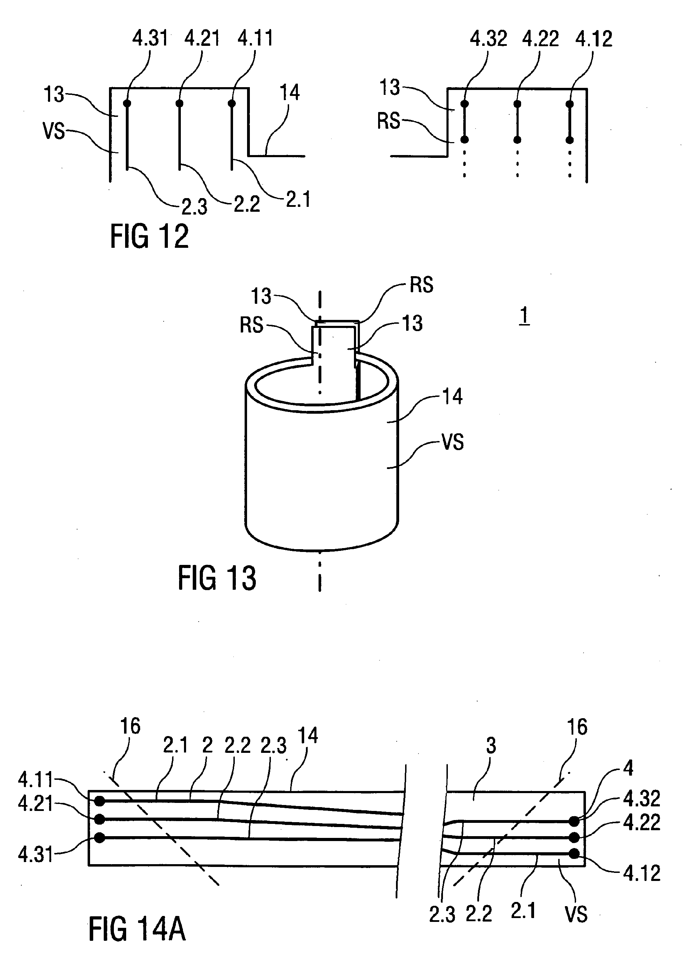

Um eine Vereinfachung des Aufbaus der Spule 1 zu erreichen, sind, wie Figur 12 zeigt, die Kontaktflächen 4 der innersten Lage vorzugsweise auf der Vorderseite VS des Substrates 3 und die Kontaktflächen 4 der äußersten Lage auf der Rückseite RS des Substrates 3 angeordnet. Somit ist das versatzlose Übereinanderliegen der Kontaktflächen 4 erzielbar, wobei gleichzeitig ein gekreuztes Aufbringen der Abschnitte 2.1, 2.2, 2.3 des Stromleiters 2 auf das Substrat 3 entfällt.

Figur 13 stellt eine mehrlagig aufgerollte Spule 1 mit herausgeführten Fahnen 13 dar. Die auf den Fahnen 13 angeordneten, der Einfachheit halber nicht näher dargestellten Kontaktflächen 4 liegen versatzlos übereinander und sind in einfacher Art und Weise mittels verschiedener elektrischer Verbindungstechniken, wie z. B. Löt-, Bond-, Klebe- und/oder Klemmtechniken, elektrisch miteinander kontaktierbar. Die herausgeführten Fahnen 13 dienen weiterhin der elektrischen Kontaktierung der Spule 1 von außen.

In Figur 14A ist eine vorteilhafte Weiterbildung der erfindungsgemäßen Spule 1 dargestellt. Zu einer Herausführung der Kontaktflächen 4 der Abschnitte 2.1, 2.2, 2.3 des Stromleiters 2 sind in das Substrat 3 eine oder mehrere Faltlinien 16 eingebracht, um welche des Substrat 3 mit dem aufgebrachten Stromleiter 2 sowohl auf die Vorderseite VS als auch auf die Rückseite RS des Substrates 3 faltbar ist.

Die Faltlinien 16 sind dabei vorzugsweise als in das Substrat 3 eingebrachte Perforationslinien ausgebildet und in einem Winkel von +45° und/oder -45° zur Querausdehnung des Substrates 3 angeordnet.

Um nach dem Aufrollen ein versatzloses Übereinanderliegen und eine richtige Zuordnung der Kontaktflächen 4 zueinander sicherzustellen, sind die Abschnitte 2.1, 2.2, 2.3 des Stromleiters 2 gekreuzt auf das Substrat 2 aufgebracht.

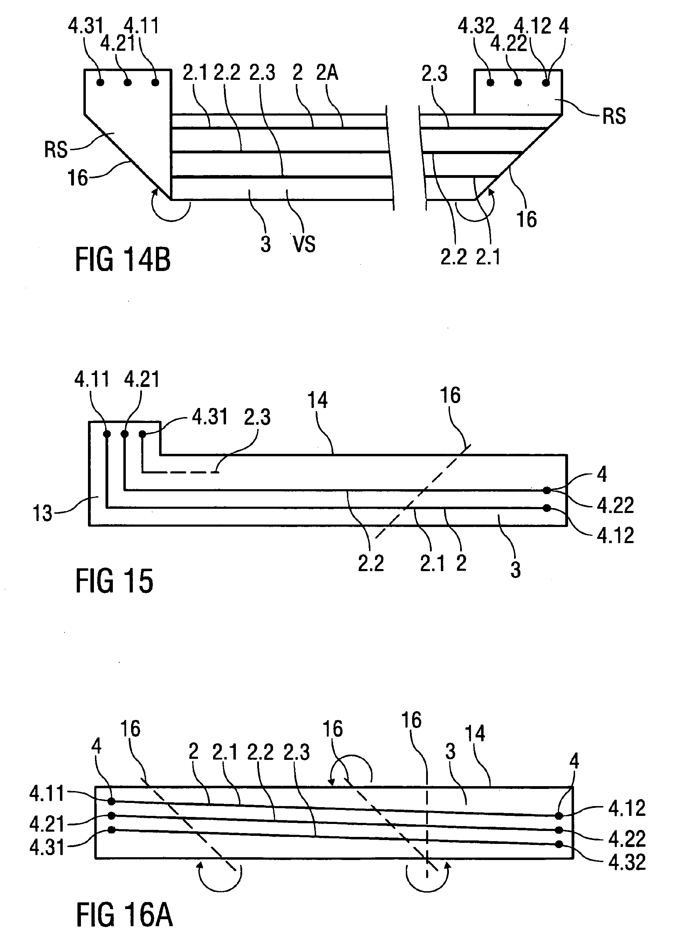

Figur 14B zeigt beispielhaft das in Figur 14A dargestellte Substrat 3, welches einerseits um eine Faltlinie 16 auf die Vorderseite VS und anderseits um eine Faltlinie 16 auf die Rückseite RS gefaltet ist. Nach einem Aufrollen liegen die zweiten Kontaktflächen 4.12, 4.22 der Abschnitte 2.1, 2.2 versatzlos über den ersten Kontaktflächen 4.21, 4.31 der darauf folgenden Abschnitte 2.2, 2.3, so dass eine elektrische Reihenschaltung der einzelnen Abschnitte 2.1, 2.2, 2.3 realisierbar ist.

Zu einer Vereinfachung des Aufbaus und somit der Herstellung der Spule 1 ist in vorteilhafter Weise ein gekreuztes Aufbringen der Abschnitte 2.1, 2.2, 2.3 des Stromleiters 2 anhand eines Herausführens der Kontaktflächen 4 durch eine in Figur 15 dargestellte, gleichzeitige Verwendung von Fahnen 13 und Faltungen vermeidbar.

Dabei sind beispielsweise die ersten Kontaktflächen 4.11, 4.21, 4.31 der Abschnitte 2.1, 2.2, 2.3 des Stromleiters 2 als Fahne 13 über den Längsrand 14 des Substrates 3 herausgeführt, während die zweiten Kontaktflächen 4.12, 4.22, 4.32 mittels einer Faltung um eine Faltlinie 16 herausgeführt sind.

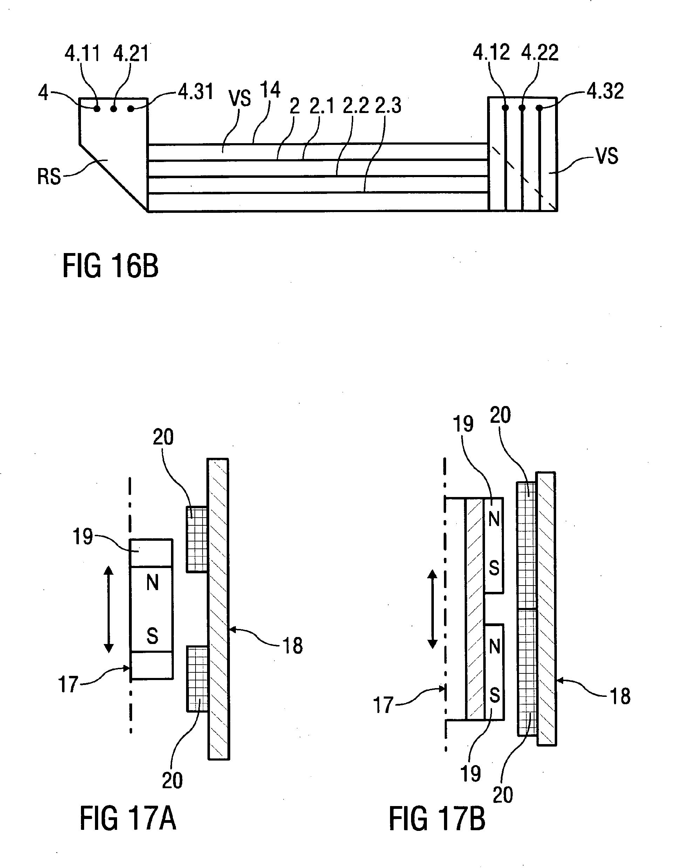

Des Weiteren ist eine ungerade Anzahl von Faltungen derart erreichbar, dass gemäß den Figuren 16A und 16B die ersten Kontaktflächen 4.11, 4.21, 4.31 der Abschnitte 2.1, 2.2, 2.3 des Stromleiters 2 durch eine Faltung um eine Faltlinie 16 von +45° herausgeführt sind. Gleichzeitig sind die zweiten Kontaktflächen 4.12, 4.22, 4.32 durch eine Faltung um eine Faltlinie 16 von 45° und eine weitere Faltung um eine Faltlinie 16, welche waagerecht zur Querausdehnung des Substrates angeordnet ist, herausgeführt.

Die Figuren 17A bis 17D zeigen Schnittbilder verschiedener Ausführungsformen von Läufern 17 und Statoren 18 eines nicht näher dargestellten linearen elektrodynamischen Motors mit zylindrischer Bauform. Bei elektrodynamischen Motoren ist es üblich, mehrere Motorspulen 20 zu verwenden. Dabei kann gemäß Figur 17A der Läufer 17 als bewegter Dauermagnet 19 und der Stator 18 mit zwei feststehenden Motorspulen 20 ausgeführt sein.

In einer weiteren Ausführungsform sind gemäß Figur 17B an dem Läufer 17 zwei Dauermagneten 19 angeordnet und die zwei Motorspulen 20 stehen als Stator 18 fest.

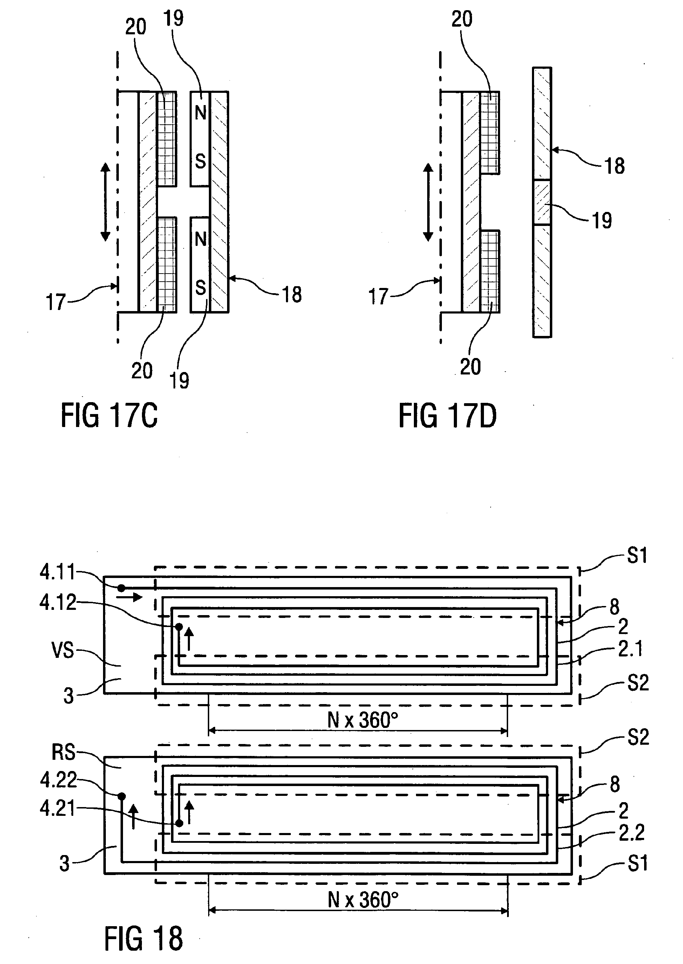

Alternativ sind auf dem Läufer 17 die Motorspulen 1 angeordnet, wobei der Stator 18 gemäß Figur 17C aus zwei und gemäß Figur 17D aus einem Dauermagnet 19 gebildet ist.

Bei jeder der Motorspulen 20 müssen die nicht näher dargestellten elektrischen Leiter derart angeordnet sein, dass der Wicklungssinn für jede Motorspule 20 beibehalten wird. Vergleicht man beide mit dem gleichen Strom durchflossene Motorspulen 20, muss der Wicklungssinn gegeneinander gerichtet sein. Ist der Wicklungssinn gleich, müssen beide Ströme ein unterschiedliches Vorzeichen aufweisen.

In vorteilhafter Weise ist der unterschiedliche Wicklungssinn bzw. der Vorzeichenwechsel in der Stromrichtung in einer Weiterbildung der Erfindung derart ausnutzbar, dass die elektrischen Leiter für beide Motorspulen 20 als Stromleiter 2 verkoppelt auf einer aufgerollten Spule 1 angeordnet sind. Somit ist eine aufgerollte Spule 1 anstelle zweier einzelner gewickelter Motorspulen 20 verwendbar.

Figur 18 zeigt eine Möglichkeit zur Realisierung der in Figur 17D dargestellten Motorspulen 20 mittels einer aufgerollten Spule 1.

Dabei ist ein Abschnitt 2.1 des Stromleiters 2 auf einer Vorderseite VS des Substrates 3 in einer Spiralform nach innen geführt angeordnet und ein weiterer Abschnitt 2.2 des Stromleiters 2 unter Beibehaltung der Spiralform auf einer Rückseite RS des Substrates 3 nach außen geführt angeordnet. Die zweite Kontaktfläche 4.12 des ersten Abschnittes 2.1 auf der Vorderseite VS ist versatzlos über der ersten Kontaktfläche 4.21 des zweiten Abschnittes 2.2 angeordnet und elektrisch mit dieser verbunden.

Dadurch bildet sich sowohl auf der Vorderseite VS als auch auf der Rückseite RS des Substrates 3 jeweils eine Spiralspule 8 mit entgegengesetztem Wicklungssinn aus. In einem aufgerollten Zustand der Spule 1 bilden die Teile des Stromleiters 2, welche sich sowohl auf der Vorderseite VS als auch auf der Rückseite RS des Substrates 3 in einem ersten Strompfadfenster S1 befinden, eine Motorspule 20 und die Teile des Stromleiters 2, welche sich sowohl auf der Vorderseite VS als auch auf der Rückseite RS des Substrates 3 in einem zweiten Strompfadfenster S2 befinden, die andere Motorspule 20 mit entgegen gesetztem Wicklungssinn.

Die Verwendung der aufgerollten Spule 1 als Ersatz der zwei Motorspulen 20 führt in vorteilhafter Weise dazu, dass aufgrund höherer zulässiger Stromdichten gegenüber den klassisch gewickelten Motorspulen 20 kräftigere Linearmotoren herstellbar sind. Weiterhin ist eine Gewichtsreduktion gegenüber den klassisch gewickelten Motorspulen 20 erzielbar, welche anhand einer Reduktion des Substrates 3 zwischen den Strompfadfenstern S1, S2 weiter vergrößerbar ist.

Gemäß einer sinnvollen Weiterführung der Erfindung sind anhand einer aufgerollten Spule 1 mehrere herkömmlich auf mehrere Statoren 18 eines Elektromotors gewickelte Motorspulen 20 ersetzbar.

Im Stand der Technik werden die Motorspulen 20 anhand von Wickeltechniken auf die Statoren 18 aufgebracht, wobei die elektrischen Leiter, insbesondere Kupferdrähte, welche aufgrund ihres erforderlichen Querschnitts relativ biegesteif sind, mithilfe von Fädeltechniken durch den Stator geführt werden müssen. Dies ist nur mit großem Aufwand realisierbar und führt lediglich zu einer geringen Stromtragfähigkeit.

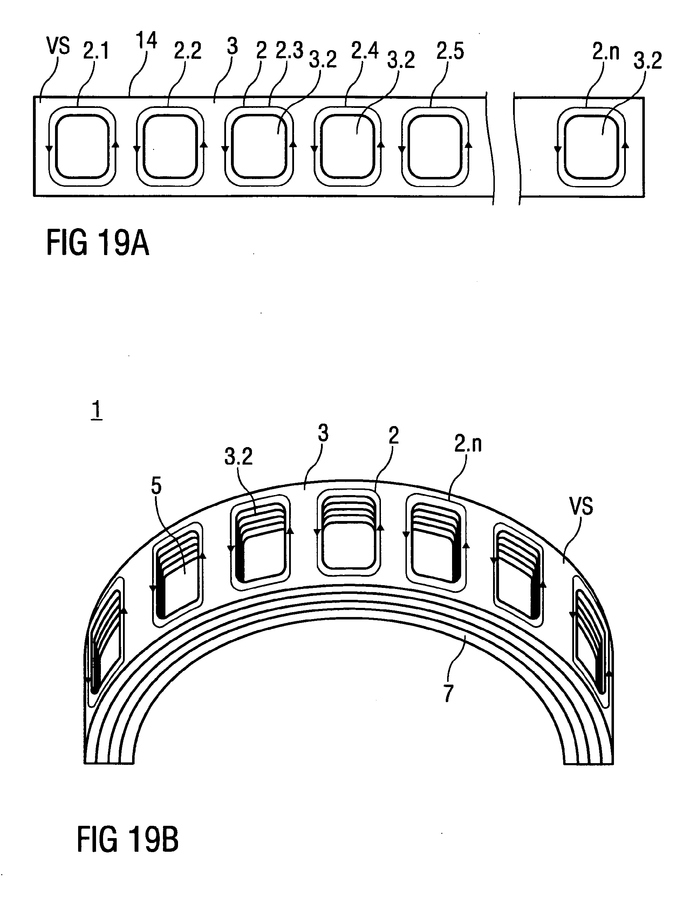

Anstelle dieser klassisch gewickelten Motorspulen 20 bietet sich die Verwendung einer aufgerollten Spule 1 an, wie sie ausschnittsweise in Figur 19B dargestellt ist. Zur Erzeugung dieser aufgerollten Spule 1 sind gemäß Figur 19A Abschnitte 2.1 bis 2.n von Stromleitern 2 als Flachspulen in einer periodischen Anordnung nebeneinander auf der Vorderseite VS und/oder der Rückseite RS des Substrates 3 aufgebracht. Die Flachspulen sind dabei insbesondere als eine einzelne Wicklung ausgeführt, welche eine in das Substrat 3 eingebrachte Materialaussparung 3.2 umgibt. In einer nicht näher dargestellten Weiterführung der Erfindung können die Flachspulen auch in einer anderen Anordnung auf das Substrat 3 aufgebracht sein, so dass bei einer Beaufschlagung dieser mit elektrischem Strom verschiedenste Magnetfelder erzeugbar sind.

Bei einem Aufrollen des Substrates 3 zu der in Figur 19B dargestellten Spule 1 liegen die Materialaussparungen 3.2 versatzlos übereinander und bilden Hohlräume 5, durch welche nicht näher dargestellte Polschuhe des Stators 18 führbar sind. Zu einer Erzeugung einer aufgerollten Spule 1 für einen Stator 18 mit beispielsweise sechs Polschuhen ist alle 60° eine Aussparung 3.2 in dem Substrat 3 angeordnet. Durch den beim Aufrollen zunehmenden Radius der Spule 1 verringert sich die Größe der Aussparungen 3.2 mit zunehmender Lagenanzahl. Die aufgerollte Spule 1 ist je nach gewünschten Anforderungen für einen Stator 18 mit beliebiger Anzahl von Polschuhen herstellbar.

Die ebenfalls versatzlos übereinander angeordneten Flachspulen sind beispielsweise mittels der Durchkontaktierungen 9 öder mittels eines Lötverfahrens elektrisch miteinander verbindbar, so dass eine dreidimensionale Leiterstruktur erreicht wird. Bei einer Beaufschlagung der Stromleiter 2 mit dem elektrischen Strom ist in vorteilhafter Weise mittels der Spule 1 ein Magnetfeld mit einer genau definierten, vorgegebenen Feldstruktur erzeugbar.

Mittels der dargestellten aufgerollten Spule 1 ist in vorteilhafter Weise eine große Amperewindungszahl bei geringem Leiterfüllfaktor erzeugbar, so dass höhere Stromdichten im Vergleich zu klassisch gewickelten Motorspulen 20 erzielbar sind.

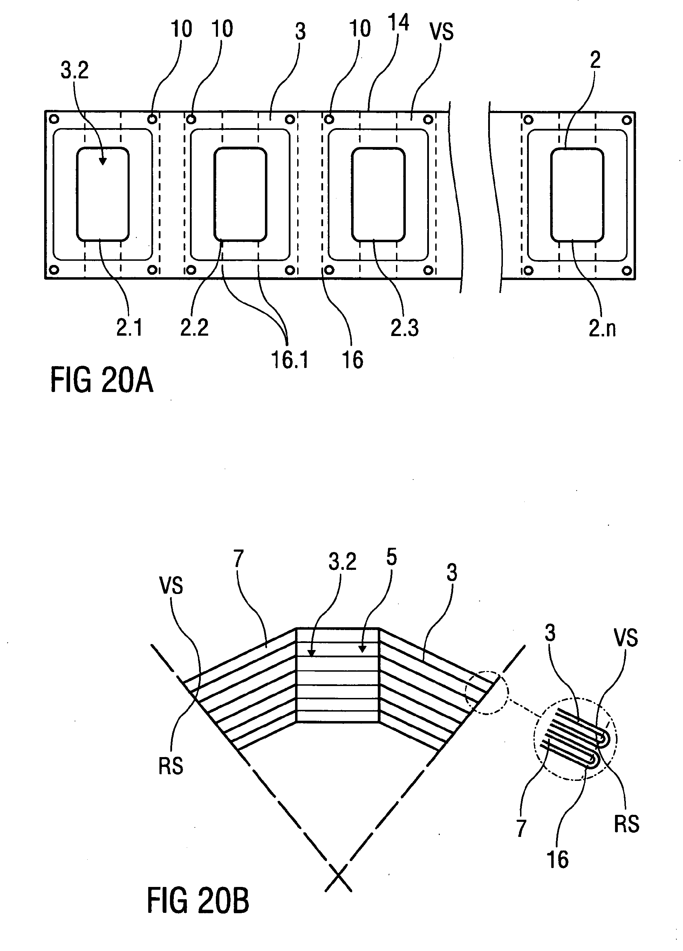

Alternativ zum Ersatz der Motorspulen 20 mit einer aufgerollten Spule 1 ist eine Motorspule 20 mittels einer in einer Schnittdarstellung in Figur 20B gezeigten gefalteten Spule 1 ersetzbar.

Zur Erzeugung dieser gefalteten Spule 1 sind gemäß Figur 20A Abschnitte 2.1 bis 2.n von Stromleitern 2 als Flachspulen in einer periodischen Anordnung nebeneinander auf die Vorderseite VS und/oder Rückseite RS des Substrates 3 aufgebracht. Die Flachspulen sind dabei als eine einzelne Wicklung ausgeführt, welche eine in das Substrat 3 eingebrachte Materialaussparung 3.2 umgibt.

Um eine einfach durchführbare Faltung des Substrates 3 sicherzustellen, sind mehrere Faltlinien 16, insbesondere ausgeführt als Perforationslinien, waagerecht zu der Querausdehnung des Substrates 3 in dieses eingebracht. Um diese Faltlinien 16 ist das Substrat 3 abwechselnd auf die Vorderseite VS und auf die Rückseite RS gefaltet.

Um eine rotatorische Anordnung im Stator 18 optimal zu nutzen, sind in das Substrat 3, insbesondere randseitig der Aussparungen 3.2, zusätzliche Faltlinien 16.1 eingebracht, um welche dass Substrat 3 derart faltbar bzw. knickbar ist, dass von den Aussparungen 3.2 aus eine beidseitig absinkende Anordnung des Substrates 3 realisierbar ist.

Ferner sind in das Substrat 3 Markierungen 10 vorzugsweise als Justagelöcher eingebracht, durch welche beim Falten und Formgeben durch Knicken nicht näher dargestellte Justagestifte führbar sind. Während des Faltens ist zwischen den einzelnen Lagen der gefalteten Spule 1 eine Zwischenschicht 7 einbringbar, so dass nach dem Fügen dieser eine mechanisch stabile, gefaltete Spule 1 entsteht, welche mit dem ausgebildeten Hohlraum 5 auf einem Polschuh des Stators 18 anordbar ist.

Auch mittels der dargestellten gefalteten Spule 1 ist in vorteilhafter Weise eine große Amperewindungszahl bei hohem Leiterfüllfaktor erzeugbar, so dass höhere Stromdichten im Vergleich zu klassisch gewickelten Motorspulen 20 erzielbar sind.

### Bezugszeichenliste

- 1: Spule
- 2: Stromleiter
- 2.1 bis 2.n: Abschnitt
- 3: Substrat
- 3.1: Durchführungen
- 3.2: Materialaussparung
- 4: Kontaktfläche
- 4.11: Erste Kontaktfläche
- 4.12: Zweite Kontaktfläche
- 4.21: Erste Kontaktfläche
- 4.22: Zweite Kontaktfläche
- 4.31: Erste Kontaktfläche
- 4.32: Zweite Kontaktfläche
- 5: Hohlraum
- 6: Grundkörper
- 7: Zwischenschicht
- 8: Spiralspule
- 9: Durchkontaktierung
- 10: Markierung
- 11: Mäanderspule
- 12: Helixspule
- 13: Fahne
- 14: Längsrand
- 15: magnetischer Leiter
- 16: Faltlinie
- 16.1: Faltlinie
- 17: Läufer
- 18: Stator
- 19: Dauermagnet
- 20: Motorspule

- S1: Erstes Strompfadfenser
- S1: Zweites Strompfadfenser

## Patentansprüche

1. Verfahren zur Herstellung einer Spule (1), bei dem ein flexibles, elektrisch isolierendes Substrat (3), auf welches ein Stromleiter (2) aufgebracht oder in welches der Stromleiter (2) eingebracht ist, aufgerollt und/oder gefaltet wird, wobei mehrere Lagen mit lagenweise korrespondierenden Abschnitten (2.1 bis 2.n) von Stromleitern (2) aufgerollt und/oder gefaltet werden,
**dadurch gekennzeichnet,**
**dass** zwischen den Lagen eine Zwischenschicht (7), insbesondere ein thermischer Leiter zum Aufnehmen und Abführen thermischer Energie angeordnet wird, wobei die Zwischenschicht (7) in Teilbereichen zwischen den Lagen und/oder mit variierbarer Stärke angeordnet wird, so dass der Versatz übereinander liegender, korrespondierender Abschnitte (2.1 bis 2.n) von Stromleitern (2) lagenweise ausgeglichen wird.

2. Verfahren nach Anspruch 1,
**dadurch gekennzeichnet,**
**dass** eine Markierung (10), insbesondere eine Markierung (10) pro Umfang auf dem Substrat (3) angeordnet wird, die eine lagenweise Überprüfung auf Versatz der übereinander liegenden, korrespondierenden Abschnitte (2.1 bis 2.n) von Stromleitern (2) ermöglicht.

3. Verfahren nach Anspruch 1 oder 2,
**dadurch gekennzeichnet,**
**dass** der Stromleiter (2) vor dem Aufrollen und/oder Falten derart auf das flexible, elektrisch isolierende Substrat (3) aufgebracht wird, dass eine Flachspule oder mehrere Flachspulen auf einer Lage des Substrates (3) erzeugt wird oder werden, wobei die Flachspule insbesondere als Spiralspule (8), Mäanderspule (11) oder als Helixspule (12) mit einem magnetischen Leiter ausgeführt wird.

4. Verfahren nach einem der Ansprüche 1 bis 3,
**dadurch gekennzeichnet,**
**dass** Abstände zwischen Abschnitten (2.1 bis 2.n) von Stromleitern (2) derart sich vergrößernd ausgebildet werden, dass beim Aufrollen und/oder Falten mit sich lagenweise vergrößerndem Umfang der Lagen korrespondierende Abschnitte (2.1 bis 2.n) von Stromleitern (2) versatzlos übereinander liegen.

5. Verfahren nach einem der Ansprüche 1 bis 4,
**dadurch gekennzeichnet,**
**dass** ein einzelner Abschnitt (2.1) des Stromleiters (2) vor dem Aufrollen und/oder Falten derart auf das Substrat (2) aufgebracht wird, dass beim Aufrollen und/oder Falten einer Lage eine zweite Kontaktfläche (4.12) des Abschnittes (2.1) des Stromleiters (2) versatzlos über einer ersten Kontaktfläche (4.11) desselben Abschnittes (2.1) liegt oder dass mehrere Abschnitte (2.1 bis 2.n) des Stromleiters (2) vor dem Aufrollen und/oder Falten derart in einer versetzten Anordnung auf das Substrat (3) aufgebracht werden, dass beim Aufrollen und/oder Falten einer Lage eine zweite Kontaktfläche (4.12, 4.22, 4.32) eines Abschnittes (2.1 bis 2.n) des Stromleiters (2) versatzlos über einer ersten Kontaktfläche (4.11, 4.21, 4.31) eines nachfolgenden Abschnittes (2.1 bis 2.n) des Stromleiters (2) liegt.

6. Verfahren nach einem der Ansprüche 1 bis 5,
**dadurch gekennzeichnet,**
**dass** Kontaktflächen (4) mehrerer Abschnitte (2.1 bis 2.n) des Stromleiters (2) vor dem Aufrollen und/oder Falten derart in einer versetzten Anordnung auf das Substrat (3) aufgebracht werden, dass beim Aufrollen und/oder Falten mehrerer Lagen eine auf einer äußersten Lage angeordnete zweite Kontaktfläche (4.12, 4.22, 4.32) eines Abschnittes (2.1 bis 2.n) des Stromleiters (2) versatzlos über einer auf einer innersten Lage angeordneten ersten Kontaktfläche (4.11, 4.21, 4.31) eines nachfolgenden Abschnittes (2.1 bis 2.n) des Stromleiters (2) liegt.

7. Spule (1), insbesondere hergestellt nach einem Verfahren gemäß einem der Ansprüche 1 bis 6,
**dadurch gekennzeichnet,**
**dass** ein flexibles, elektrisch isolierendes Substrat (3), auf welches ein Stromleiter (2) aufgebracht oder in welches der Stromleiter (2) eingebracht ist, derart aufgerollt und/oder gefaltet ist, dass Stromleiter (2) eine dreidimensionale Leiterstruktur bilden, so dass bei einer Beaufschlagung der Stromleiter (2) mit einem elektrischen Strom ein Magnetfeld mit einer vorgegebenen Feldstruktur erzeugbar ist, wobei mehrere Lagen mit lagenweise korrespondierenden Abschnitten (2.1 bis 2.n) von Stromleitern (2) aufrollbar und/oder faltbar sind, so dass über den Umfang der Spule (1) ein oder mehrere korrespondierende Abschnitte (2.1 bis 2.n) von Stromleitern (2) auf jeder Lage angeordnet sind, wobei zwischen den Lagen eine Zwischenschicht (7), insbesondere ein thermischer Leiter zum Aufnehmen und Abführen thermischer Energie angeordnet ist, wobei die Zwischenschicht (7) in Teilbereichen zwischen den Lagen und/oder mit variierbarer Stärke angeordnet ist, so dass der Versatz übereinander liegender, korrespondierender Abschnitte (2.1 bis 2.n) von Stromleitern (2) lagenweise ausgleichbar ist.

8. Spule (1) nach Anspruch 7,
**dadurch gekennzeichnet,**
**dass** eine Lage mit einem oder mehreren lagenweise korrespondierenden Abschnitten (2.1 bis 2.n) von Stromleitern (2) ausgeführt ist, wobei die lagenweise korrespondierenden Abschnitte (2.1 bis 2.n) von Stromleitern (2) in einer Reihe und/oder parallel angeordnet sind.

9. Spule (1) nach Anspruch 7 oder 8,
**dadurch gekennzeichnet,**
**dass** anhand zyklisch auf das elektrisch isolierende Substrat (3) aufgebrachter lagenweise korrespondierender Abschnitte (2.1 bis 2.n) von Stromleitern (2) ein Multipol realisierbar ist, wobei der Multipol insbesondere als Dipol, Kreuzdipol, Quadrupol oder Hexapol ausgebildet ist.

10. Spule (1) nach einem der Ansprüche 7 bis 9,
**dadurch gekennzeichnet,**
**dass** mehrere Lagen punktuell und/oder flächig mittels Niettechniken, Schweißtechniken, Bondtechniken, Löttechniken und/oder Klebetechniken miteinander verbunden sind.

11. Spule (1) nach einem der Ansprüche 7 bis 10,
**dadurch gekennzeichnet,**
**dass** eine Markierung (10), insbesondere eine Markierung (10) pro Umfang auf dem Substrat (3) angeordnet ist, die eine lagenweise Überprüfung auf Versatz der übereinander liegenden, korrespondierenden Abschnitte (2.1 bis 2.n) von Stromleitern (2) ermöglicht.

12. Spule (1) nach einem der Ansprüche 7 bis 11,
**dadurch gekennzeichnet,**
**dass** anhand von Kontaktflächen (4) die Stromleiter (2) und/oder die korrespondierenden Abschnitte (2.1 bis 2.n) von Stromleitern (2) lagenweise elektrisch verbindbar sind, dass Durchkontaktierungen (9) an den Kontaktflächen (4) vertikal zu den Kontaktflächen (4) die lagenweise korrespondierenden Abschnitte (2.1 bis 2.n) von Stromleitern (2) verschiedener Lagen elektrisch verbinden.

13. Spule (1) nach Anspruch 12,
**dadurch gekennzeichnet, dass** zu einer zu einer Herausführung der Kontaktflächen (4) über einen Längsrand (14) des Substrates (3) dieses und die Abschnitte (2.1 bis 2.n) des Stromleiters (2) einfach oder mehrfach um eine Faltlinie (16) gefaltet sind, wobei mittels der herausgeführten Kontaktflächen (4) und/oder mittels über den Längsrand (14) des Substrates (3) überstehenden Fahnen (13) lagenweise korrespondierende Abschnitte (2.1 bis 2.n) von Stromleitern (2) verschiedener Lagen elektrisch verbindbar sind bzw. die Spule (1) von außen elektrisch kontaktierbar ist.

14. Spule (1) nach einem der Ansprüche 7 bis 13,
**dadurch gekennzeichnet,**
**dass** die Lagen des Substrates (3) jeweils eine oder mehrere Materialaussparungen (3.2) aufweisen, die vor oder nach dem Aufrollen und/oder Falten des Substrates (3) in dieses eingebracht sind, wobei diese nach dem Aufrollen und/oder Falten versatzlos übereinander liegen, wobei Abschnitte (2.1 bis 2.n) des Stromleiters (2) vor dem Aufrollen und/oder Falten derart auf die Vorderseite (VS) und die Rückseite (RS) des Substrates (2) aufbringbar sind, dass eine oder mehrere die Materialaussparungen (3.2) umgebende Flachspulen auf einer Lage des Substrates (3) erzeugbar sind, wobei die direkt übereinander angeordneten Flachspulen der Vorderseite (VS) und der Rückseite (RS) einer Lage sowie die nach dem Aufrollen und/oder Falten direkt übereinander angeordneten Flachspulen benachbarter Lagen elektrisch miteinander verbunden sind.

15. Spule (1) nach einem der Ansprüche 7 bis 14,
**dadurch gekennzeichnet,**
**dass** anhand von in Hohlräume (5) eingesetzten weichmagnetischen und/oder hartmagnetischen Elementen und/oder anhand von beim Aufrollen und/oder Falten in die Spule integrierten oder in die Hohlräume (5) eingesetzten Eisenkreisteilen ein magnetischer Fluss steuerbar ist.

## Claims

1. Procedure for manufacturing a coil (1) in which a flexible, electrically insulating substrate (3) is coiled up and/or folded, to which substrate a current conductor (2) is applied or in which the current conductor (2) is inserted, while several layers with sections (2.1 to 2.n) of current conductors (2) corresponding layer by layer are coiled up and/or folded,
**characterised in**
**that** an intermediate layer (7), in particular a thermal conductor for absorbing and dissipating thermal energy is arranged between the layers, while the intermediate layer (7) is arranged in subareas between the layers and/or with a variable thickness such that the offset between superimposed corresponding sections (2.1 to 2.n) of current conductors (2) is compensated layer by layer.

2. Procedure as claimed in claim 1,
**characterised in**
**that** a mark (10), in particular a mark (10) for every circumference on the substrate (3), is arranged and allows to check the offset of the superimposed, corresponding sections (2.1 to 2.n) of current conductors (2) layer by layer.

3. Procedure as claimed in any claim 1 or 2,
**characterised in**
**that** the current conductor (2), before being coiled up and/or folded, is applied to the flexible, electrically insulating substrate (3) so as to create one flat coil or several flat coils on one layer of the substrate (3), while the flat coil is designed, in particular, as a spiral coil (8), as a meander coil (11), or as a helical coil (12) having a magnetic conductor.

4. Procedure as claimed in any claim 1 through 3,
**characterised in**
**that** the distances between sections (2.1 to 2.n) of current conductors (2) are designed so as to enlarge in a way which ensures that, when coiling up and/or folding with a circumference becoming larger layer by layer, corresponding sections (2.1 to 2.n) of current conductors (2) will be superimposed without any offset.

5. Procedure as claimed in any claim 1 through 4,
**characterised in**
**that** a single section (2.1) of the current conductor (2), before coiling up and/or folding, is applied to the substrate (2) ensuring that, during the coiling up and/or folding of one layer, a second contact surface (4.12) of this section (2.1) of the current conductor (2) is superimposed without any offset over a first contact surface (4.11) of the same section (2.1) or that several sections (2.12 to 2.n) of the current conductor (2), before coiling up and/or folding, are applied in an offset arrangement onto the substrate (3) ensuring that, during the coiling up and/or folding of one layer, a second contact surface (4.12, 4.22, 4.32) of a section (2.1 to 2.n) of the current conductor (2) is superimposed without any offset over a first contact surface (4.11, 4.21, 4.31) of a subsequent section (2.1 to 2.n) of the current conductor (2).

6. Procedure as claimed in any claim 1 through 5,
**characterised in**
**that** contact surfaces (4) of several sections (2.1 to 2.n) of the current conductor (2), before coiling up and/or folding, are applied in such an offset arrangement onto the substrate (3) that, during the coiling up and/or folding of several layers, a second contact surface (4.12, 4.22, 4.32) located on an outermost layer of a section (2.1 to 2.n) of the current conductor (2) is superimposed without any offset over a first contact surface (4.11, 4.21, 4.31) located on an innermost layer of a subsequent section (2.1 to 2.n) of the current conductor (2).

7. Coil (1) manufactured, in particular, according to a procedure as claimed in any claim 1 through 6,
**characterised in**
**that** a flexible, electrically insulating substrate (3) to which a current conductor (2) is applied or in which the current conductor (2) is inserted, is coiled up and/or folded such that current conductors (2) form a three dimensional conductor structure, ensuring that, when subjecting the current conductors (2) to an electrical current, a magnetic field is generable with a predefined field structure, while several layers with current conductor (2) sections (2.1 to 2.n) corresponding layer by layer are rollable and/or foldable such that one or more corresponding sections (2.1 to 2.n) of current conductors (2) are arranged over the circumference of the coil (1) on every layer, while an intermediate layer (7), in particular, a thermal conductor for absorbing and dissipating thermal energy, is arranged between the layers, while the intermediate layer (7) is arranged in subareas between the layers and/or with a variable thickness such that the offset between superimposed, corresponding sections (2.1 to 2.n) of current conductors (2) may be compensated layer by layer.

8. Coil (1) as claimed in claim 7,
**characterised in**
**that** a layer with one or more current conductor (2)
sections (2.1 to 2.n) corresponding layer by layer is designed while the current conductor (2) sections (2.1 to 2.n) corresponding layer by layer are arranged in a series and/or in parallel.

9. Coil (1) as claimed in any claim 7 or 8,
**characterised in**
**that** a multipole is realizable using current conductor (2) sections (2.1 to 2.n) corresponding layer by layer, applied in cycles to the electrically insulating substrate (3), while the multipole is designed, in particular, as a dipole, as a cross pole, as a quadrupole or as a hexapole.

10. Coil (1) as claimed in any claim 7 through 9,
**characterised in**
**that** several layers are linked to one another punctually and/or in laminar form using riveting techniques, welding techniques, bonding techniques, soldering or brazing techniques and/or gluing techniques.

11. Coil (1) as claimed in any claim 7 through 10,
**characterised in**
**that** a mark (10), in particular a mark (10) for every circumference on the substrate (3), is arranged and allows to check the offset of the superimposed, corresponding sections (2.1 to 2.n) of current conductors (2) layer by layer.

12. Coil (1) as claimed in any claim 7 through 11,
**characterised in**
**that**, using contact surfaces (4), the current conductors (2) and/or the corresponding sections (2.1 to 2.n) of current conductors (2) are connectable electrically layer by layer, that through connections (9) at the contact surfaces (4) establish an electrical connection vertically to the contact surfaces (4) between the different layers of the current conductor (2) sections (2.1 to 2.n) corresponding layer by layer.

13. Coil (1) as claimed in claim 12,
**characterised in**
**that**, for a lead bringing out the contact surfaces (4) via a longitudinal edge (14) of the substrate (3), the substrate (3) and the sections (2.1 to 2.n) of the current conductor (2) are folded once or several times around a folding line (16), while sections (2.1 to 2.n) corresponding layer by layer and belonging to current conductors (2) of different layers are connectable electrically or the coil (1) is contactable electrically from the outside using the contact surfaces (4) brought out and/or tabs (13) projecting beyond the longitudinal edge (14) of the substrate (3).

14. Coil (1) as claimed in any claim 7 through 13,
**characterised in**
**that** the layers of the substrate (3) each present one or more material cutouts (3.2) which are made in the substrate (3) either before or after coiling up and/or folding the substrate (3), while these are superimposed one on top of the other without any offset after coiling up and/or folding, while sections (2.1 to 2.n) of the current conductor (2) are applicable to the front side (VS) and to the rear side (RS) of the substrate (2) before coiling up and/or folding such that one or more flat coils surrounding the material cutouts (3.2) are generable on a layer of the substrate (3), while the flat coils arranged directly on top of one another at the front side (VS) and at the rear side (RS) of one layer and the flat coils of neighbouring layers arranged directly on top of one another after coiling up and/or folding are connected electrically to one another.

15. Coil (1) as claimed in any claim 7 through 14,
**characterised in**
**that** a magnetic flux is controllable using soft magnetic and/or hard magnetic elements inserted in cavities (5) and/or ferromagnetic circuit parts integrated into the coil during coiling up and/or folding or inserted in the cavities (5).

## Revendications

1. Procédé de fabrication d'une bobine (1), où est enroulé et/ou plié un substrat (3) flexible électriquement isolant, sur lequel un conducteur de courant (2) est appliqué ou dans lequel le conducteur de courant (2) est mis en place, plusieurs couches avec des parties (2.1 à 2.n) des conducteurs de courant (2) se correspondant de couche à couche étant enroulées et/ou pliées,
**caractérisé**
**en ce qu'**une couche intercalaire (7), en particulier un conducteur thermique pour l'absorption et l'évacuation d'énergie thermique est disposée entre les couches, ladite couche intercalaire (7) étant disposée dans des zones partielles entre les couches et/ou d'épaisseur variable, de manière à compenser de couche à couche le décalage de parties (2.1 à 2.n) superposées et correspondantes des conducteurs de courant (2).

2. Procédé selon la revendication 1,
**caractérisé**
**en ce qu'**une marque (10), en particulier une marque (10) par périphérie est disposée sur le substrat (3), laquelle permet une vérification du décalage de couche à couche entre les parties (2.1 à 2.n) superposées et correspondantes des conducteurs de courant (2).

3. Procédé selon la revendication 1 ou la revendication 2,
**caractérisé**
**en ce que** le conducteur de courant (2) est appliqué avant enroulement et/ou pliage sur le substrat (3) flexible électriquement isolant, de telle manière qu'une bobine plate ou plusieurs bobines plates est ou sont produites sur une couche du substrat (3), la bobine plate étant en particulier réalisée comme bobine hélicoïdale (8), bobine à méandres (11) ou comme bobine en hélice (12) avec un conducteur magnétique.

4. Procédé selon l'une des revendications 1 à 3,
**caractérisé**
**en ce que** les intervalles entre les parties (2.1 à 2.n) des conducteurs de courant (2) sont réalisés en s'agrandissant, de telle manière que lors de l'enroulement et/ou du pliage avec une périphérie de couche s'agrandissant de couche en couche, des parties (2.1 à 2.n) correspondantes des conducteurs de courant (2) sont superposées sans décalage.

5. Procédé selon l'une des revendications 1 à 4,
**caractérisé**
**en ce qu'**une partie isolée (2.1) du conducteur de courant (2) est appliquée avant enroulement et/ou pliage sur le substrat (3), de telle manière que lors de l'enroulement et/ou du pliage d'une couche, une deuxième surface de contact (4.12) de la partie (2.1) du conducteur de courant (2) repose sans décalage au-dessus d'une première surface de contact (4.11) de la même partie (2.1), ou en ce que plusieurs parties (2.1 à 2.n) du conducteur de courant (2) sont avant enroulement et/ou pliage appliquées sur le substrat (3) suivant un agencement décalé, de telle manière que lors de l'enroulement et/ou du pliage d'une couche, une deuxième surface de contact (4.12, 4.22, 4.32) d'une partie (2.1 à 2.n) du conducteur de courant (2) repose sans décalage au-dessus d'une première surface de contact (4.11, 4.21, 4.31) d'une partie suivante (2.1 à 2.n) du conducteur de courant (2).

6. Procédé selon l'une des revendications 1 à 5,
**caractérisé**
**en ce que** des surfaces de contact (4) de plusieurs parties (2.1 à 2.n) du conducteur de courant (2) sont avant enroulement et/ou pliage appliquées sur le substrat (3) suivant un agencement décalé, de telle manière que lors de l'enroulement et/ou du pliage de plusieurs couches, une deuxième surface de contact (4.12, 4.22, 4.32) d'une partie (2.1 à 2.n) du conducteur de courant (2), disposée sur la couche la plus extérieure, repose sans décalage au-dessus d'une première surface de contact (4.11, 4.21, 4.31) d'une partie suivante (2.1 à 2.n) du conducteur de courant (2), disposée sur la couche la plus intérieure.

7. Bobine (1), notamment fabriquée suivant un procédé selon l'une des revendications 1 à 6,
**caractérisée**
**en ce qu'**un substrat (3) flexible électriquement isolant, sur lequel un conducteur de courant (2) est appliqué ou dans lequel le conducteur de courant (2) est mis en place, est enroulé et/ou plié, de telle manière que des conducteurs de courant (2) forment une structure de conducteurs tridimensionnelle, si bien qu'en cas d'application d'un courant électrique sur les conducteurs de courant (2), un champ magnétique ayant une structure de champ définie peut être généré, plusieurs couches avec des parties (2.1 à 2.n) des conducteurs de courant (2) se correspondant de couche à couche étant enroulées et/ou pliées, de telle manière qu'une ou plusieurs parties (2.1 à 2.n) correspondantes des conducteurs de courant (2) sont disposées sur chaque couche à la périphérie de la bobine (1), une couche intercalaire (7), en particulier un conducteur thermique pour l'absorption et l'évacuation d'énergie thermique étant disposée entre les couches, ladite couche intercalaire (7) étant disposée dans des zones partielles entre les couches et/ou d'épaisseur variable, de manière à compenser de couche à couche le décalage de parties (2.1 à 2.n) superposées et correspondantes des conducteurs de courant (2).

8. Bobine (1) selon la revendication 7,
**caractérisée**
**en ce qu'**une couche avec une ou plusieurs parties (2.1 à 2.n) des conducteurs de courant (2) se correspondant de couche à couche est réalisée de telle manière que les parties (2.1 à 2.n) des conducteurs de courant (2) se correspondant de couche à couche sont disposées sur une ligne et/ou parallèlement.

9. Bobine (1) selon la revendication 7 ou la revendication 8,
**caractérisée**
**en ce qu'**un multipôle est réalisable à partir de parties (2.1 à 2.n) des conducteurs de courant (2) se correspondant de couche à couche, cycliquement appliquées sur le substrat (3) flexible électriquement isolant, ledit multipôle étant notamment réalisé comme dipôle, dipôle croisé, quadripôle ou hexapôle.

10. Bobine (1) selon l'une des revendications 7 à 9,
**caractérisée**
**en ce que** plusieurs couches sont raccordées les unes aux autres, ponctuellement et/ou superficiellement par techniques de rivetage, de soudage, de liaison, de brasage et/ou de collage.

11. Bobine (1) selon l'une des revendications 7 à 10,
**caractérisée**
**en ce qu'**une marque (10), en particulier une marque (10) par périphérie est disposée sur le substrat (3), laquelle permet une vérification du décalage de couche à couche entre les parties (2.1 à 2.n) superposées et correspondantes des conducteurs de courant (2).

12. Bobine (1) selon l'une des revendications 7 à 11,
**caractérisée**
**en ce qu'**à partir des surfaces de contact (4), les conducteurs de courant (2) et/ou les parties (2.1 à 2.n) correspondantes des conducteurs de courant (2) peuvent être électriquement reliés de couche à couche, en ce que des contacts transversaux (9) sur les surfaces de contact (4) relient électriquement de couche à couche, verticalement par rapport aux surfaces de contact (4), les parties (2.1 à 2.n) correspondantes des conducteurs de courant (2) de différentes couches.

13. Bobine (1) selon la revendication 12,
**caractérisée**
**en ce que**, perpendiculairement à une sortie des surfaces de contact (4) sur un bord longitudinal (14) du substrat (3), celui-ci et les parties (2.1 à 2.n) du conducteur de courant (2) sont pliés une ou plusieurs fois autour d'une ligne de pliage (16), les parties (2.1 à 2.n) correspondantes des conducteurs de courant (2) de différentes couches pouvant être électriquement reliées de couche à couche au moyen des surfaces de contact (4) sorties et/ou au moyen de languettes (13) dépassant du bord longitudinal (14) du substrat (3), ou la bobine (1) pouvant être électriquement contactée de l'extérieur.

14. Bobine (1) selon l'une des revendications 7 à 13,
**caractérisée**
**en ce que** les couches du substrat (3) comportent chacune un ou plusieurs évidements de matière (3.2) qui sont ménagés dans le substrat (3) avant ou après enroulement et/ou pliage de celui-ci, lesdits évidements étant superposés sans décalage après enroulement et/ou pliage, les parties (2.1 à 2.n) du conducteur de courant (2) étant applicables avant enroulement et/ou pliage sur la face avant (VS) et la face arrière (RS) du substrat (2), de telle manière qu'une ou plusieurs bobines plates entourant les évidements de matière (3.2) puisse être produite sur une couche du substrat (3), les bobines plates de la face avant (VS) et de la face arrière (RS) d'une couche directement superposées l'une à l'autre ainsi que les bobines plates de couches contiguës directement superposées l'une à l'autre après enroulement et/ou pliage étant électriquement reliées entre elles.

15. Bobine (1) selon l'une des revendications 7 à 14,
**caractérisée**
**en ce qu'**un flux magnétique peut être commandé à partir d'éléments magnétiques doux et/ou magnétiques durs mis en place dans des cavités (5) et/ou à partir de pièces de circuit dans le fer intégrées à la bobine ou mises en place dans les cavités (5) lors de l'enroulement et/ou du pliage.
